# EUROPEAN PATENT SPECIFICATION

(11) **EP 3 608 839 B1**
(45) Date of publication and mention of the grant of the patent: **09.07.2025**
(21) Application number: 19200620.3
(22) Date of filing: 14.12.2015
(51) Int. Cl.: G06V 40/18, G06V 40/50

(54) **METHOD AND ELECTRONIC DEVICE FOR UPDATING A BIOMETRIC FEATURE PATTERN**
VERFAHREN UND ELEKTRONISCHE VORRICHTUNG ZUR AKTUALISIERUNG DES MUSTERS VON BIOMETRISCHEN MERKMALEN
PROCÉDÉ ET DISPOSITIF ÉLECTRONIQUE DE MISE À JOUR D'UN MOTIF CARACTÉRISTIQUE BIOMÉTRIQUE

(30) Priority: 15.12.2014 KR 20140180691
(43) Date of publication of application: 12.02.2020
(62) Divisional of application: 15199900.0
(73) Proprietor: Samsung Electronics Co., Ltd., Gyeonggi-do 16677 (KR)
(72) Inventor: Han, Young-Eun, Gyeonggi-do, Suwon-si 16677 (KR); Kim, Moon-Soo, Gyeonggi-do, Suwon-si 16677 (KR); Son, Kwang-Sub, Gyeonggi-do, Suwon-si 16677 (KR); Lee, Ki-Huk, Gyeonggi-do, Suwon-si 16677 (KR); Jeon, Bo-Seul, Gyeonggi-do, Suwon-si 16677 (KR)
(74) Representative: Nederlandsch Octrooibureau

(56) References cited:
- "Iris Biometrics: From Segmentation to Template Security", 1 January 2013, SPRINGER SCIENCE+BUSINESS MEDIA, article CHRISTIAN RATHGEB ET AL: "Advanced Comparison Techniques for Challenging Iris Images", XP055266263, DOI: 10.1007/978-1-4614-5571
- RATHGEB C ET AL: "Bit Reliability-driven Template Matching in Iris Recognition", IMAGE AND VIDEO TECHNOLOGY (PSIVT), 2010 FOURTH PACIFIC-RIM SYMPOSIUM ON, IEEE, PISCATAWAY, NJ, USA, 14 November 2010 (2010-11-14), pages 70 - 75, XP031839270, ISBN: 978-1-4244-8890-2

## Description

### TECHNICAL FIELD

The present disclosure relates to an electronic device, and more particularly to a method and an apparatus for updating a biometric feature pattern by using an electronic device.

### BACKGROUND

Recently, electronic devices have been developed, including various functions, for example, capturing of a picture or video, Internet communication, and the like, in addition to a simple call function. As the electronic devices have included various functions, importance associated with personal information security has raised. In particular, personal information security is very important for an electronic device that includes functions that may cause significantly serious damage when they are illegally used by a stranger such as Internet financial services and the like. As described above, according to the increase in the importance of security of the electronic device, the electronic device has various types of security functions to limit the use by another user.

For security, biometric features may be used for identifying a user, and research on a security technology using various pieces of biometric information such as a fingerprint, voice, retina, face, iris, and the like is in progress. Among the various pieces of biometric information, a security method using the fingerprint is representative. Since individuals have different fingerprints, the fingerprint is biological tissue first adopted by a security system. The security method using the fingerprint has been popularly utilized since a fingerprint recognizing device has a high recognition rate and a user may readily use the device.

Further, a security method using an iris is recently spotlighted. Among various pieces of biometric information, the human irises have different shapes and, particularly, have a little risk to be copied and are hardly changed during the lifetime. Accordingly, the iris may have the highest discrimination.

For a method of recognizing a particular person through the iris, a technology of rapidly detecting the pupil and iris is necessary to recognize the iris in real time in an image generated by photographing a part of the human eye. Further, it is necessary to rapidly detect the pupil from the image generated by photographing the eye part in real time in order to use the iris recognition technology in a portable electronic device such as a mobile phone and the like. However, the iris recognition rate may deteriorate due to a change in an iris image generated by a pupil size change in accordance with an ambient brightness change.
Document from Christian Rathgeb ET AL, titled "Advanced Comparison Techniques for Challenging Iris Images" In: "Iris Biometrics: From Segmentation to Template Security", (1 January 2013), discloses comparison techniques for challenging iris images. Document from RATHGEB C ET AL, titled "Bit Reliability-driven Template Matching in Iris Recognition", IMAGE AND VIDEO TECHNOLOGY (PSIVT), 2010 FOURTH PACIFIC-RIM SYMPOSIUM ON, IEEE, PISCATAWAY, NJ, USA, (14 November 2010), discloses a technique for matching binary iris-codes. Information of authentication procedures is leveraged by maintaining so-called reliability masks. Based on user-specific reliability masks a weighted matching procedure is performed in order to improve recognition performance.

### SUMMARY

To address the above-discussed deficiencies, it is a primary object to provide, for use in a method and an apparatus for improving accuracy of iris recognition in consideration of a pupil reacting light brightness and an iris area varying depending on the pupil.

In accordance with an aspect of the present disclosure, a method of updating a biometric feature pattern, the method comprising:acquiring (1100), via a sensor, a plurality of successive biometric images associated with a same type of a biometric object, each of the successive biometric images comprising a feature pattern that comprises feature points, wherein the biometric object is one of an iris or a fingerprint, wherein the plurality of successive biometric images comprises a first biometric image and a second biometric image, wherein the second biometric image is acquired after the first biometric image is acquired;comparing (1105, 1210) a feature pattern of the first biometric image with a pre-registered feature pattern to determine (1110) whether the feature pattern of the first biometric image matches the pre-registered feature pattern by a predetermined ratio or more;in response to determining that the feature pattern of the first biometric image matches the pre-registered feature pattern by the predetermined ratio or more, updating (1120,1240) the pre-registered feature pattern by adding at least one feature point of the feature pattern of the first biometric image to empty feature point parts of the pre-registered feature pattern;in response to determining that the feature pattern of the first biometric image does not match the pre-registered feature pattern by the predetermined ratio or more, temporarily storing the first biometric image;comparing (1105, 1210) a feature pattern of the second biometric image with the pre-registered feature pattern to determine (1110) whether the feature pattern of the second biometric image matches the pre-registered feature pattern by the predetermined ratio or more, wherein in response to determining that the feature pattern of the second biometric image does not match the pre-registered feature pattern by the predetermined ratio or more, the updating is processed as failure (123;in response to determining that the feature pattern of the second biometric image matches the pre-registered feature pattern by the predetermined ratio or more and in response to determining (1235) that the temporarily stored first biometric image and the second biometric image correspond to a same user, updating (1120, 1245) the pre-registered feature pattern by adding at least one feature point of the feature pattern of the first biometric image and at least one feature point of the feature pattern of the second biometric image to empty feature point parts of the pre-registered feature pattern,wherein determining that the temporarily stored first biometric image and the second biometric image correspond to the same user comprises:determining a time difference between a time point when the first biometric image is acquired and a time point when the second biometric image is acquired, wherein the temporarily stored first biometric image and the second biometric image correspond to the same user in case the time difference between the two frames is smaller than a threshold.

In accordance with another aspect of the present disclosure, an electronic device (101) for updating a biometric feature pattern, the electronic device comprising:a memory (380);a sensor (340); and a controller (310) configured to:acquire, via the sensor (340), a plurality of successive biometric images associated with a same type of a biometric object, each of the successive biometric images comprising a feature pattern that comprises feature points, wherein the biometric object is one of an iris or a fingerprint, wherein the plurality of successive biometric images comprises a first biometric image and a second biometric image, wherein the second biometric image is acquired after the first biometric image is acquired;compare (1105, 1210) a feature pattern of the first biometric image with a pre-registered feature pattern on the user stored in the memory to determine (1110) whether the feature pattern of the first biometric image matches the pre-registered feature pattern by a predetermined ratio or more;in response to determining that the feature pattern of the first biometric image matches the pre-registered feature pattern by the predetermined ratio or more, update (1120,1240) the pre-registered feature pattern by adding at least one feature point of the feature pattern of the first biometric image to empty feature point parts of the pre-registered feature pattern;in response to determining that the feature pattern of the first biometric image does not match the pre-registered feature pattern by the predetermined ratio or more, temporarily store the first biometric image,compare (1105, 1210) a feature pattern of the second biometric image with the pre-registered feature pattern to determine (1110) whether the feature pattern of the second biometric image matches the pre-registered feature pattern by the predetermined ratio or more, wherein in response to determining that the feature pattern of the second biometric image does not match the pre-registered feature pattern by the predetermined ratio or more, the updating is processed as failure (1230); andin response to determining that the feature pattern of the second biometric image matches the pre-registered feature pattern by the predetermined ratio or more and in response to determining (1235) that the temporarily stored first biometric image and the second biometric image correspond to a same user, update (1120, 1245) the pre-registered feature pattern by adding at least one feature point of the feature pattern of the first biometric image and at least one feature point of the feature pattern of the second biometric image to empty feature point parts of the pre-registered feature pattern,wherein determining that the temporarily stored first biometric image and the second biometric image correspond to the same user comprises:determining a time difference between a time point when the first biometric image is acquired and a time point when the second biometric image is acquired, wherein the temporarily stored first biometric image and the second biometric image correspond to the same user in case the time difference between the two frames is smaller than a threshold.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a network environment including an electronic device according to various embodiments of the present disclosure;
FIG. 2 is a block diagram of a program module according to various embodiments of the present disclosure;
FIG. 3 is an internal block diagram of an electronic device for receiving biometric information to perform authentication according to various embodiments of the present disclosure;
FIGs. 4 and 5 illustrate a biometric authentication mode according to various embodiments of the present disclosure;
FIG. 6 is an internal block diagram of an electronic device for updating biometric information according to various embodiments of the present disclosure;
FIG. 7 illustrates an example of a feature pattern of an iris image according to various embodiments of the present disclosure;
FIGs. 8 and 9 illustrate an operation for a comparison with a registered iris template according to various embodiments of the present disclosure;
FIG. 10 illustrates a method of updating a registered iris template according to various embodiments of the present disclosure;
FIG. 11 is a flowchart illustrating an operation of updating registered biometric information according to various embodiments of the present disclosure;
FIG. 12 is a flowchart illustrating an operation of updating a registered iris image according to various embodiments of the present disclosure;
FIGs. 13, 14, and15 are flowcharts illustrating an operation for determining whether iris images are related to the same user according to various embodiments of the present disclosure;
FIG. 16 illustrates an example of a feature pattern of a fingerprint image according to various embodiments of the present disclosure;
FIGs. 17 and 18 illustrate an operation for a comparison with a registered fingerprint according to various embodiments of the present disclosure;
FIG. 19 illustrates a method of updating a registered fingerprint according to various embodiments of the present disclosure; and
FIG. 20 is a block diagram of an electronic device according to various embodiments of the present disclosure.

### DETAILED DESCRIPTION

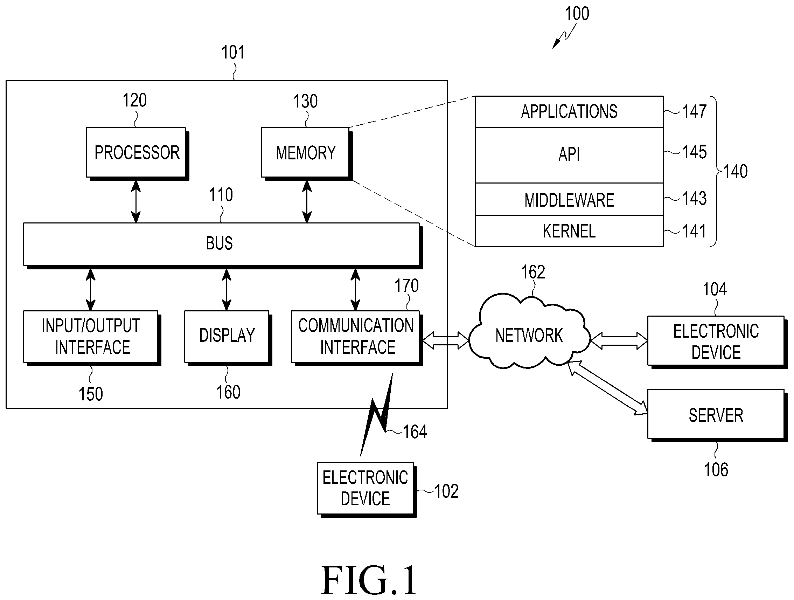

FIGURES 1 through 20, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. Hereinafter, exemplary embodiments of the present disclosure will be described with reference to the accompanying drawings. However, the present disclosure is not restricted or limited by the exemplary embodiments. The same reference numerals represented in each of the drawings indicate the elements that perform substantially the same functions.

Hereinafter, various embodiments of the present disclosure will be described with reference to the accompanying drawings. However, it should be understood that there is no intent to limit the present disclosure to the particular forms disclosed herein; rather, the present disclosure should be construed to cover various modifications, equivalents, and/or alternatives of embodiments of the present disclosure. In describing the drawings, similar reference numerals may be used to designate similar constituent elements.

As used herein, the expression "have", "may have", "include", or "may include" refers to the existence of a corresponding feature (e.g., numeral, function, operation, or constituent element such as component), and does not exclude one or more additional features.

As used herein, the expression "A or B", "at least one of A and/or B", or "one or more of A and/or B" may include any or all possible combinations of items enumerated together. For example, the expression "A or B", "at least one of A and B", or "at least one of A or B" refers to all of (1) including at least one A, (2) including at least one B, or (3) including all of at least one A and at least one B.

The expressions such as "first", "second", or the like used in various embodiments of the present disclosure may modify various elements regardless of order or importance, and do not limit corresponding elements. The expressions may be used to distinguish a component element from another component element. For example, a first user device and a second user device indicate different user devices although both of them are user devices. For example, a first element may be termed a second element, and similarly, a second element may be termed a first element without departing from the scope of the present disclosure.

When it is mentioned that one element (e.g., a first element) is "(operatively or communicatively) coupled with/to or connected to" another element (e.g., a second element), it should be construed that the one element is directly connected to the another element or the one element is indirectly connected to the another element via yet another element (e.g., a third element). Conversely, when one component element is "directly coupled" or "directly connected" to another component element, it may be construed that a third component element does not exist between the first component element and the second component element.

The expression "configured to" used in the present disclosure may be exchanged with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

The terms used herein are merely for the purpose of describing particular embodiments and are not intended to limit the scope of other embodiments. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary are to be interpreted to have the meanings equal to the contextual meanings in the relevant field of the art, and are not to be interpreted to have ideal or excessively formal meanings unless clearly defined in the present disclosure. In some cases, even the term defined in the present disclosure should not be interpreted to exclude embodiments of the present disclosure.

For example, the electronic device may include at least one of a smartphone, a tablet personal computer (PC), a mobile phone, a video phone, an electronic book (e-book) reader, a desktop PC, a laptop PC, a netbook computer, a personal digital assistant (PDA), a portable multimedia player (PMP), an MP3 player, a mobile medical appliance, a camera, and a wearable device (e.g., a head-mounted-device (HMD) such as electronic glasses, electronic clothes, an electronic bracelet, an electronic necklace, an electronic appcessory, electronic tattoos, or a smart watch).

According to some embodiments, the electronic device may be a smart home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., SAMSUNG HOMESYNC^{™}, APPLE TV^{™}, or GOOGLE TV^{™}), a game console (e.g., XBOX^{™} and PLAYSTATION^{™}), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR) , a Flight Data Recorder (FDR) , a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology

Hereinafter, an electronic device according to various embodiments of the present disclosure will be described with reference to the accompanying drawings. As used herein, the term "user" may indicate a person who uses an electronic device or a device (e.g., an artificial intelligence electronic device) that uses an electronic device.

An electronic device 101 within a network environment 100 according to various embodiments will be described with reference to FIG. 1. The electronic device 101 may include a bus 110, a processor 120, a memory 130, an input/output interface 150, a display 160, and a communication interface 170. In some embodiments, the electronic device 101 may omit at least some of the above components or further include other components.

The bus 110 may include a circuit for connecting the components 120 to 170 and transmitting communication between the components (for example, control messages and/or data). The processor 120 may include one or more of a Central Processing Unit (CPU), an Application Processor (AP), and a Communication Processor (CP). For example, the processor 120 may control at least one other component of the electronic device 101 and/or carry out operations or data processing related to communication. The processor 120 may be called a controller or may include a controller as a part thereof.

When the processor 120 according to various embodiments of the present disclosure acquires a plurality of a series of successive biometric images, the processor 120 may compare each of the plurality of biometric images with a pre-registered feature pattern and determine a biometric image that matches the pre-registered feature pattern, and then add, to the pre-registered feature pattern, at least one feature point of the biometric image that does not match the pre-registered feature pattern among the plurality of biometric images, so as to control an operation of updating the pre-registered feature pattern. The registered feature pattern may be at least a part or entirety of the whole feature pattern of the biometric image of the user. For example, in a case of the iris, since an optimal iris image acquired from one frame is patterned and stored without combining several iris images in the registration, the feature pattern for the biometric authentication may not be complete. Therefore, the update of the registered feature pattern may be required.

Accordingly, when there is the biometric image that matches the pre-registered feature pattern by a predetermined ratio or more, it may be considered that the authentication is successful and thus a function according to the authentication success may be performed. Further, the registered feature pattern may be automatically updated using at least some of the biometric image that matches by the predetermined ratio or more.

According to various embodiments of the present disclosure, when the processor 120 acquires a plurality of biometric images to perform the authentication and compares the acquired biometric images with the stored feature pattern, if a result of the comparison is larger than or equal to a threshold, the processor 120 may complete the user authentication. However, the processor 120 may control the operation of updating the pre-registered feature pattern by using at least some of the biometric image that partially matches the pre-registered feature pattern even though the biometric image does not match the pre-registered feature pattern, that is, the biometric image that does not match by the predetermined ratio or more based on the matching result. At this time, the processor 120 may temporarily store the biometric image that does not match the pre-registered feature pattern by the predetermined ratio or more in the memory 130 without discarding the biometric image in the comparison operation. The temporarily stored biometric image may be stored as it collected, or stored in a processed data form or a coded template form after only an iris part is extracted.

When there is the biometric image that matches the pre-registered feature pattern in the comparison operation, the processor 120 may update the pre-registered feature pattern stored in the memory 130 by using the temporarily stored biometric image that matches by the predetermined ratio or less. According to various embodiments of the present disclosure, the pre-registered feature pattern may be updated using at least some of the biometric image that matches by a ratio smaller than the predetermined ratio as well as at least some of the biometric image that matches by the predetermined ratio or more. By updating the stored feature pattern through information or records acquired during the authentication, a False Reject Rate (FRR) can be reduced.

For example, although the user is a registered user, a biometric image, which is not sufficient to be compared with the stored feature pattern, may be acquired due to light reflection or concealment at a time point when the biometric image of the user is acquired. That is, even though the biometric image does not match the stored feature pattern by the predetermined ratio or more, the biometric image may match at least a part of the whole feature pattern of the biometric image. Accordingly, in order to determine whether the biometric image can be used for updating the registered feature pattern, the biometric image may be temporarily stored although the biometric image does not match by the predetermined ratio or more.

As described herein, when there is the biometric image that matches the pre-registered feature pattern in the comparison operation, the processor 120 may analyze the records processed as failure in the comparison operation. When at least one of the plurality of biometric images is successfully authenticated, a biometric image successively connected to the biometric image, which has been successfully authenticated, may be also related to the same user. Accordingly, the processor 120 may control the operation of adding at least one feature point of the biometric image that matches by a ratio smaller than the predetermined ratio to the pre-registered feature pattern if the biometric image is a biometric image, which does not match the pre-registered feature pattern by the predetermined ratio or more based on the biometric image, which has been successfully authenticated, but is related to the same user based on the biometric image that matches by the predetermined ratio or more even though the biometric image matches the pre-registered feature pattern by the ratio smaller than the predetermined ratio.

The memory 130 may include a volatile memory and/or a non-volatile memory. The memory 130 may store, for example, commands or data related to at least one other component of the electronic device 101. According to an embodiment, the memory 130 may store software and/or a program 140. The program 140 may include, for example, a kernel 141, middleware 143, an Application Programming Interface (API) 145, and/or an application program (or "application") 147. At least some of the kernel 141, the middle 143, and the API 145 may be referred to as an Operating System (OS).

According to an embodiment, the memory 130 may store at least one piece of registered user's biometric information. The biometric information may be stored in a feature pattern form of the biometric image acquired according to each user, and the feature pattern may be at least a part or entirety of the whole feature pattern of the biometric image. Further, the memory 130 may store biometric information conversion algorithm for converting the biometric image according to each user into a feature pattern such as an iris code, template, or the like. In addition, the memory 130 may provide data which is a comparison reference in the authentication and store an algorithm for the comparison.

The kernel 141 may control or manage system resources (for example, the bus 110, the processor 120, the memory 130, or the like) used for executing an operation or function implemented by the other programs (for example, the middleware 143, the API 145, or the application program 147). Furthermore, the kernel 141 may provide an interface through which the middleware 143, the API 145, or the application program 147 may access individual components of the electronic device 101 to control or manage system resources.

For example, the middleware 143 may serve as a relay for allowing the API 145 or the application programs 147 to communicate with the kernel 141 to exchange data. Furthermore, in regard to task requests received from the application program 147, the middleware 143 may perform a control (for example, scheduling or load balancing) for the task requests using, for example, a method of assigning at least one application a priority for using the system resources (for example, the bus 110, the processor 120, or the memory 130) of the electronic device 101. The API 145 is an interface through which the application 147 controls a function provided from the kernel 141 or the middleware 143, and may include, for example, at least one interface or function (for example, command) for file control, window control, image processing, text control, or the like.

The input/output interface 150 may serve as, for example, an interface that may transfer commands or data, which is input from the user or another external device, to the other component(s) 120 to 140 and 160 to 170 of the electronic device 101. Further, the input/output interface 150 may output commands or data received from other component(s) 120 to 140 and 160 to 170 of the electronic device 101 to the user or another external device. The display 160 may include, for example, a Liquid Crystal Display (LCD), a Light Emitting Diode (LED) display, an Organic Light Emitting Diode (OLED) display, a Micro Electro Mechanical System (MEMS) display, or an electronic paper display. The display 160, for example, may display various types of contents (for example, a text, an image, a video, an icon, or a symbol) to the user. The display 160 may include a touch screen and receive, for example, a touch input, a gesture input, a proximity input, or a hovering input using an electronic pen or a user's body part.

The communication interface 170, for example, may configure communication between the electronic device 101 and an external electronic device (for example, a first external electronic device 102, a second external electronic device 104, or a server 106). For example, the communication interface 170 may be connected to a network 162 through wireless or wired communication to communicate with the external device (for example, the second external electronic device 104 or the server 106). Further, the communication interface 170 may set communication with the external device (for example, the first external electronic device 102) through short range wireless communication 164, and may be connected to the external device (for example, the second external electronic device 104) through the short range wireless communication 164 instead of the network 162. The short range wireless communication may use at least one of, for example, Beacon, Wi-Fi Direct, Bluetooth, Baseband, or audible/non-audible frequency.

The wireless communication may use, for example, at least one of LTE, LTE-A, CDMA, WCDMA, UMTS, WiBro, and GSM, for example, as a cellular communication protocol. The wired communication may include at least one of, for example, a Universal Serial Bus (USB), a High Definition Multimedia Interface (HDMI), Recommended Standard 232 (RS-232), and a Plain Old Telephone Service (POTS). The network 162 may include a telecommunication network, for example, at least one of a computer network (for example, a LAN or a WAN), Internet, and a telephone network. Each of the first and second external electronic devices 102 and 104 may be a device which is the same as or different from the electronic device 101. According to an embodiment, the server 106 may include a group of one or more servers.

According to various embodiments, all or some of the operations performed in the electronic device 101 may be executed in another electronic device or a plurality of electronic devices (for example, the electronic devices 102 and104 or the server 106). According to an embodiment, when the electronic device 101 should perform some functions or services automatically or in response to a request, the electronic device 101 may make a request for performing at least some functions relating thereto to another device (for example, the electronic device 102 or 104 or the server 106) instead of performing the functions or services by itself or additionally. The other electronic device (for example, the electronic device 102 or 104 or the server 106) may execute the requested functions or the additional functions and transfer the result thereof to the electronic device 101. The electronic device 101 may provide the requested functions or services based on the received result as it is or after additionally processing the received result. To achieve this, for example, cloud computing, distributed computing, or client-server computing technology may be used.

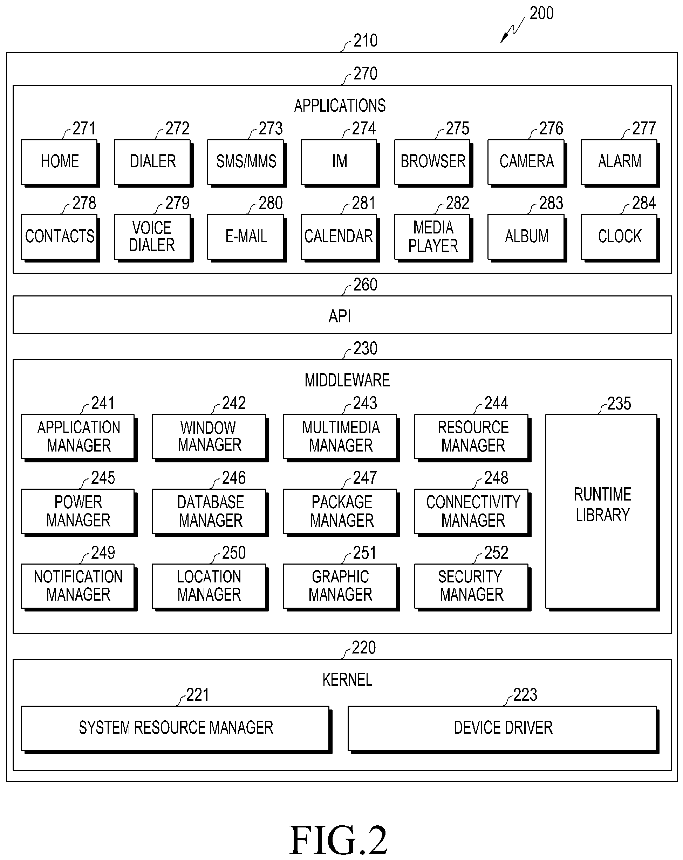

FIG. 2 is a block diagram 200 of a program module 210 according to various embodiments of the present disclosure. According to an embodiment, the program module 210 (for example, the program 140) may include an Operating System (OS) for controlling resources related to the electronic device (for example, the electronic device 101) and/or various applications (for example, the application program 147) executed in the operating system. The operating system may be, for example, Android, iOS, Windows, Symbian, Tizen, Bada, or the like. The programming module 210 may include a kernel 220, middleware 230, an Application Programming Interface (API) 260, and/or applications 270. At least some of the program module 210 may be preloaded in the electronic device or downloaded in the server (for example, the server 106).

The kernel 220 (for example, the kernel 141 of FIG. 1) may include, for example, a system resource manager 221 or a device driver 223. The system resource manager 221 may control, allocate, or collect the system resources. According to an embodiment, the system resource manager 221 may include a process manager, a memory manager, a file system manager, or the like. The device driver 223 may include, for example, a display driver, a camera driver, a Bluetooth driver, a shared memory driver, a USB driver, a keypad driver, a Wi-Fi driver, an audio driver, or an Inter-Process Communication (IPC) driver.

The middleware 230 may provide a function required by the applications 270 in common or provide various functions to the applications 270 through the API 260 so that the applications 270 can efficiently use limited system resources of the electronic device. According to an embodiment, the middleware 230 (for example, the middleware 143) may include, for example, at least one of a runtime library 235, an application manager 241, a window manager 242, a multimedia manager 243, a resource manager 244, a power manager 245, a database manager 246, a package manager 247, a connectivity manager 248, a notification manager 249, a location manager 250, a graphic manager 251, and a security manager 252. The runtime library 235 may include, for example, a library module that a compiler uses to add new functions through a programming language while the application 270 is executed. The runtime library 235 may perform input/output management, memory management, or a function for an arithmetic function.

The application manager 241 may manage, for example, a life cycle of at least one application among the applications 270. The window manager 242 may manage Graphical User Interface (GUI) resources used by a screen. The multimedia manager 243 may grasp formats required for the reproduction of various media files, and may perform an encoding or decoding of the media file by using a codec suitable for the corresponding format. The resource manager 244 may manage resources such as a source code, a memory, and a storage space of at least one of the applications 270.

The power manager 245 may operate together with a Basic Input/Output System (BIOS) to manage a battery or power and may provide power information required for the operation of the electronic device. The database manager 246 may generate, search for, or change a database to be used by at least one of the applications 270. The package manager 247 may manage the installation or the update of applications distributed in the form of package file.

The connectivity manager 248 may manage a wireless connection of, for example, Wi-Fi or Bluetooth. The notification manager 249 may display or notify of an event such as an arrival message, appointment, proximity notification, and the like in such a way that does not disturb a user. The location manager 250 may manage location information of the electronic device. The graphic manager 251 may manage graphic effects to be provided to a user and user interfaces related to the graphic effects. The security manager 252 may provide all security functions required for system security or user authentication. According to an embodiment, when the electronic device (for example, the electronic device 101) includes a telephone call function, the middleware 230 may further include a telephony manager for managing a voice call function or a video call function of the electronic device.

The middleware 230 may include a middleware module which forms a combination of various functions of the above-described components. The middleware 230 may provide modules specialized according to the type of OS in order to provide differentiated functions. Further, the middleware 230 may dynamically remove some of the existing components or add new components.

The API 260 (for example, the API 145) is, for example, a set of API programming functions, and may have a different configuration according to an OS. For example, in a case of Android or iOS, one API set may be provided for each platform. Further, in a case of Tizen, two or more API sets may be provided for each platform.

The applications 270 (for example, the application program 147) may include, for example, one or more applications which can provide functions such as home 271, dialer 272, SMS/MMS 273, Instant Message (IM) 274, browser 275, camera 276, alarm 277, contacts 278, voice dial 279, email 280, calendar 281, media player 282, album 283, clock 284, health care (for example, measure exercise quantity or blood sugar), or environment information (for example, atmospheric pressure, humidity, or temperature information).

According to an embodiment, the applications 270 may include an application (hereinafter, referred to as an "information exchange application" for convenience of description) supporting information exchange between the electronic device (for example, the electronic device 101) and an external electronic device (for example, the electronic device 102 or 104). The information exchange application may include, for example, a notification relay application for transferring specific information to an external electronic device or a device management application for managing an external electronic device.

For example, the notification relay application may include a function of delivering, to the external electronic device (for example, the electronic devices 102 or 104), notification information generated by other applications (for example, an SMS/MMS application, an email application, a health care application, an environmental information application, or the like) of the electronic device 101. Further, the notification relay application may receive, for example, notification information from an external electronic device to provide the received notification information to a user. The device management application may, for example, manage (for example, install, delete, or update) at least one function of the external electronic device (for example, the electronic devices 102 and 104) communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service).

According to an embodiment, the applications 270 may include an application (for example, health management application) designated according to attributes (for example, attributes of the electronic device such as the type of electronic device which corresponds to a mobile medical device) of the external electronic device (for example, the electronic device 102 or 104). According to an embodiment, the applications 270 may include an application received from the external electronic device (for example, the server 106, or the electronic device 102 or 104). According to an embodiment, the applications 270 may include a preloaded application or a third party application which can be downloaded from the server. Names of the components of the program module 210 according to the above-described embodiments may be changed according to the type of OS.

According to various embodiments, at least some of the programming module 210 may be implemented by software, firmware, hardware, or a combination of two or more thereof. At least some of the programming module 210 may be implemented (for example, executed) by, for example, the processor (for example, the AP 210). At least some of the programming module 210 may include, for example, a module, program, routine, sets of instructions, or process for performing one or more functions.

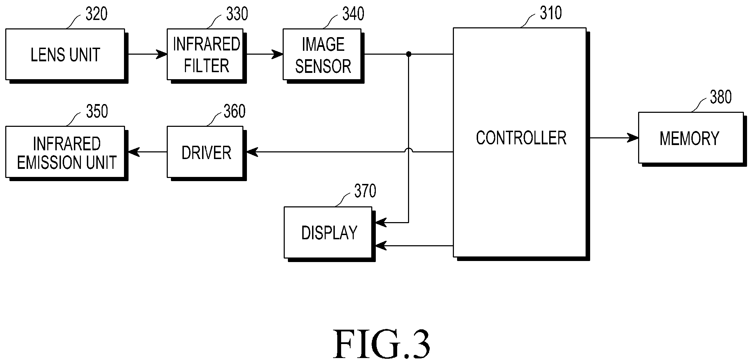

FIG. 3 is an internal block diagram of an electronic device for receiving biometric information to perform authentication according to various embodiments of the present disclosure. According to various embodiments of the present disclosure, the biometric information may include at least one piece of information on an iris, eye, fingerprint, face, hand, wrist, and blood vessel (vein or the like).

Although FIG. 3 illustrates a configuration of the electronic device (for example, the electronic device 101) including components for receiving an iris image to describe a case where the biometric information corresponds to iris information as an example, the electronic device may be configured to include components for receiving fingerprint information instead of the iris information. Further, the electronic device (for example, the electronic device 101) may be configured to include components for receiving complex biometric information to receive also the fingerprint information as well as the iris information.

Referring to FIG. 3, the electronic device 101 may include a controller 310, a lens unit 320, an infrared filter 330, an image sensor 340, an infrared emission unit 350, a driver 360, a display 370, and a memory 380. The camera module may include the lens unit 320, the infrared filter 330, the image sensor 340, the infrared emission unit 350, and the driver 360. According to an embodiment, the electronic device 101 may further include a module for additionally detecting biometric information other than the iris information or may include a module for detecting another piece of biometric information on behalf of the camera module.

First, the camera module may process an iris image acquired for iris recognition under a control of the controller 310 or independently from the controller 310, and display the iris image on the display 370. In other words, the camera module may set an iris recognition mode, generate a subject, that is, an image generated photographing the user's face by controlling the image sensor 340, and detect an image area, for example, an iris area including at least a part of the iris in the generated image.

Further, the camera module may determine guide information corresponding to the detected iris area and provide the determined guide information to the user under a control of the controller 310. The guide information may be information that guides the user to a proper location of the iris in the image used for the iris recognition. Further, the camera module may apply a predetermined image effect to the detected iris area to generate an image to which the image effect is applied and display the generated image on the display 370 under a control of the controller 310. The image effect may correspond to image processing that makes only the form of the detected iris area identifiable.

More specifically, the lens unit 320 of the camera module may adjust the lens focus to be a predetermined set value in response to a photographing control signal by the controller 310 and allow a light signal reflected from a subject to pass therethrough. The infrared emission unit (such as an InfraRed Emitting Diode: IRED) 350 may be turned on or off by the driver 360 in response to an infrared photographing control signal by the controller 310. The infrared emission unit 350 may radiate a light of a particular wavelength range, that is, a light of an infrared ray band to the subject. The infrared photographing control signal may be a signal for photographing an infrared picture.

The infrared filter 330 may allow a light signal of the infrared area among the light signals reflected from the subject (not shown) received through the lens unit 320 to pass therethrough. The image sensor 340 may convert received light signals, which have penetrated the lens unit 320, into image signals and output the image signals in a normal photographing mode, and convert light signals of the infrared area, which have penetrated the infrared filter 330, among the received light signals, which have penetrated the lens unit 320, into image signals and output the image signals. The camera module may be disposed on the electronic device 101 or disposed at an independent location.

The display 370 may include a touch screen and the like, and provide a user interface corresponding to iris photographing. Further, when the display 370 is the touch screen, the display 370 may receive a user's body, for example, a fingerprint or the like through an additionally provided fingerprint sensor. In addition, the display 370 may display a preview screen for iris photographing and display a recognition execution screen by using an iris authentication result under a control of the controller 310 according to various embodiments of the present disclosure. For example, when the iris authentication is successful, functions such as unlocking, application execution, payment approval, data transmission, and the like may be performed, and the display 370 may display screens according to the performance of the functions. The memory 380 may store a feature pattern related to at least one piece of registered user's biometric information.

When a matching ratio, which is generated by comparing an iris feature pattern registered in the memory 380 and a feature pattern of a first iris image among a plurality of a series of successive iris images acquired through the camera module, is smaller than a predetermined ratio, the controller 310 may temporarily store the feature pattern of the first iris image in the memory 380. Subsequently, the controller 310 may compare a feature pattern of a second iris image and the registered iris feature pattern. As described herein, with respect to each of the plurality of iris images, an operation for performing the comparison with the registered iris feature pattern may be repeatedly performed. When there is the iris image having the matching ratio larger than or equal to the predetermined ratio in the comparison operation, the controller 310 may detect an iris image of a user, which is identical to the user of the iris image having the matching ratio larger than or equal to the predetermined ratio, among the temporarily stored iris images and update the registered iris feature pattern by using at least some of the feature pattern of the detected iris image.

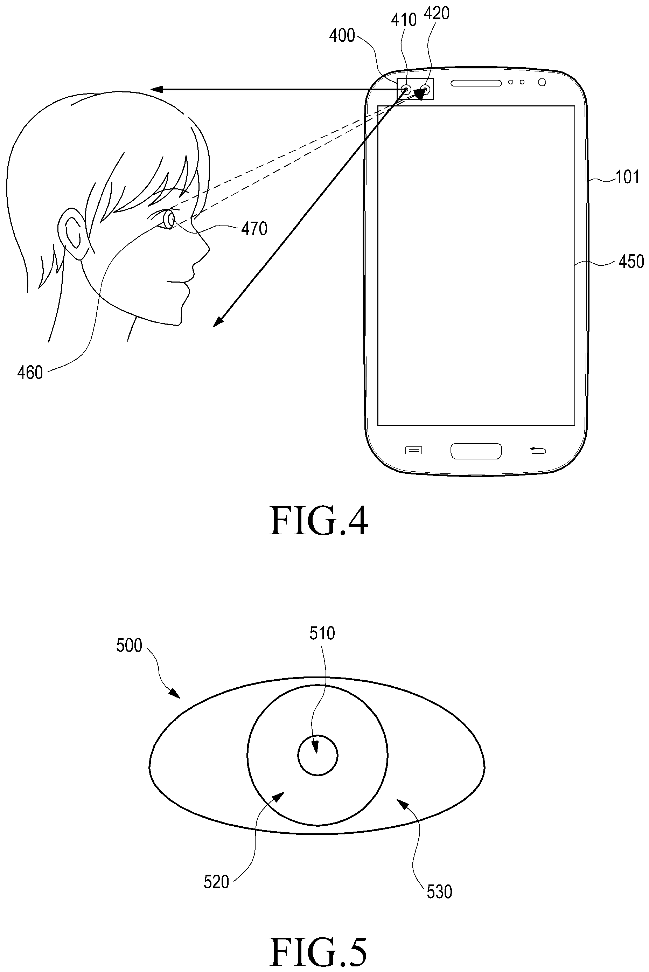

FIGs. 4 and 5 illustrate a biometric authentication mode according to various embodiments of the present disclosure. Referring to FIG. 4, a camera module 400 including at least one an infrared emission unit 410 and an infrared camera 420 may be disposed at a location of a bezel surrounding a display 450 of the electronic device 101. FIG. 4 illustrates a case where the infrared emission unit 410 and the infrared camera 420 are disposed on an upper portion of the front surface. As described herein, if the electronic device 101 has a configuration in which at least one of the infrared emission unit 410 and the infrared camera 420 can be combined with the main body to receive the image of the subject, an arrangement location thereof can be modified and changed in any degree. Although FIG. 4 illustrates an arrangement location of the camera module in the electronic device 101 of a smart phone type, the arrangement location of the camera module of the external electronic device 102 of a wearable device type can be modified and changed in any degree if the image of the subject, that is, the eye can be photographed.

First, the infrared camera 420 may convert an optical image formed by the infrared ray reflected from the subject into a digital image and output the digital image, and the controller 310 may recognize a body in the digital image. The body may include an eye, iris, fingerprint, face, hand, wrist, blood vessel (vein or the like), and the like. Referring to FIG. 4, the infrared emission unit 410 may radiate an infrared ray to an eye 460 of the user's face, and the infrared camera 420 may photograph the eye 460 and output an image of an iris 470. The controller 310 may transmit the image of the iris 470 to the electronic device 101 to perform authentication, and compare the iris image with user's iris information (iris template, iris code, and the like) stored in the electronic device 101 to recognize the user's iris.

Referring to FIG. 5, a user's eye 500 may have a pupil 510, an iris 520, and a sclera 530, the infrared emission unit 410 may radiate an infrared ray to the user's eye 500, and the infrared camera 420 may photograph the user's eye 500 and output an iris image. As described herein, the iris recognition technology to output the iris image corresponds to a technology to authenticate a user by using a donut shaped iris pattern existing between the block pupil at the center of the human eye and the sclera (the white of the eye). One person's iris has 266 measurable features, and a matching probability between irises is about 1/1078 and, accordingly, the iris recognition technology may have the highest discrimination among biometric authentication technologies known up to now. Further, since the human's iris has a shape over about 18 months after the birth and is protected by eyelashes, eyelid, and retina, the shape of the iris is not easily changed for the remainder of the human's life. Accordingly, the iris may be evaluated to have consistency compared to other biometric features such as a fingerprint, voice, face, signature, and the like.

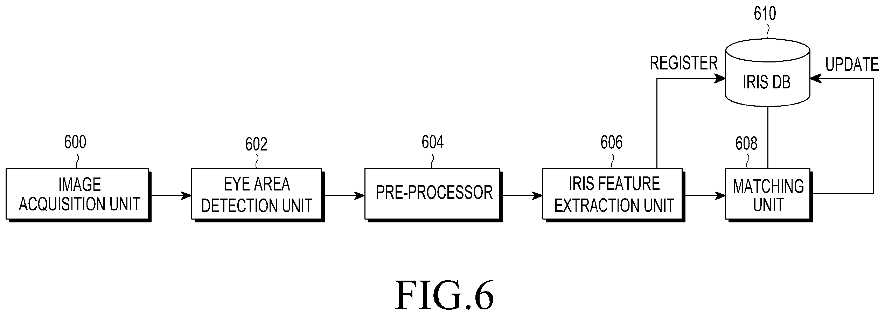

FIG. 6 is an internal block diagram of an electronic device for updating biometric information according to various embodiments of the present disclosure. Referring to FIG. 6, the electronic device may include an image acquisition unit 600, an eye area detection unit 602, a pre-processor 604, an iris feature extraction unit 606, a matching unit 608, and an iris DB 610. According to an embodiment, the electronic device 101 may further include a module for additionally detecting biometric information other than the iris information or may include a module for detecting another piece of biometric information on behalf of the image acquisition unit 600. According to an embodiment, the image acquisition unit 600 may receive a biometric image such as a user's finger that contacts a fingerprint sensor.

The image acquisition unit 600 performs a function of photographing image information on an iris and may be used as a device for acquiring an iris image through the infrared camera. At this time, the means for photographing the iris is not limited to the infrared camera, and the iris image may be acquired through other photographing means. According to an embodiment, the image acquisition unit 600 may correspond to the camera module of FIG. 3.

When a frame is received through the image acquisition unit 600, the eye area detection unit 602 may detect whether the eye exists in the frame. When the eye exists, the eye area detection unit 602 may find the pupil, determine the outline between the pupil, the iris, and the sclera, and then extract an iris part. Accordingly, when the eye area detection unit 602 detects the eye area, the pre-processor 604 may perform a function of detecting information required for extracting a feature point. The pre-processor 604 may perform pre-processing such as dividing and rotating the biometric image, and controlling the size of the biometric image to extract only the eye area, and detect data on a pupil area, data on an iris area, data on an autonomic line area, data on a location and type of hiatus.

The iris feature extraction unit 606 may serve to generate feature information on the iris based on data related to features of the iris provided by the pre-processor 604. More specifically, the iris feature extraction unit 606 may extract and segment only the iris part, and then convert the segmented iris information into a feature pattern such as an iris template, an iris code, or the like. According to various embodiments of the present disclosure, the feature information on the iris corresponds to one feature pattern generated according to only the iris part based on data related to features of the iris, and the feature pattern may have an identification code form such as an iris code, a template, or the like. The iris code may be extracted from the iris image acquired as described above. The iris code may correspond to a value generated by coding a unique feature pattern of each person in the iris image, and the iris recognition may be performed according to the iris code value.

As described herein, the method of recognizing the iris may search for the center of the pupil based on "circular edge detection", identify a brightness change position, determine an iris edge and calculate a radius to extract an iris part, and code a pattern of the extracted iris part in a predetermined form of 256 bytes.

The iris image may be converted into the iris template or the iris code by the iris feature extraction unit 606. Accordingly, the matching unit 608 may store the iris template as user registration data in an enrollment step. In a verification step, the matching unit 608 may compare the converted iris template and an iris template stored in the iris DB 610 and, when a comparison result is larger than or equal to a predetermined threshold, return authentication success. When the comparison result is not larger than the predetermined threshold, the matching unit 608 may return authentication failure.

As described herein, the matching unit 608 may perform user authentication through the iris by comparing the iris feature pattern output by the iris feature extraction unit 606 and the iris feature pattern stored in the iris DB 610. According to various embodiments of the present disclosure, the matching unit 608 temporarily stores even an iris feature pattern, which does not match the stored iris feature pattern by a predetermined threshold or more, without discarding. Then, when there is the iris feature pattern, which matches the stored iris feature pattern by the threshold or more, the matching unit 608 may consider that the iris feature pattern, which has failed the matching in the comparison operation, is also related to the same user as that of the iris feature pattern, which has matched the stored iris feature pattern, and analyze a relationship between the iris feature pattern, which has failed the matching, and the iris feature pattern, which has matched the stored iris feature pattern.

When analyzing the iris feature pattern, which has failed the matching, the matching unit 608 may analyze whether the iris feature pattern is related to the same user based on information on the time when the frame of the iris image, which has failed the matching, is input, another piece of biometric information on the user, which is input together with the iris feature pattern, which has failed the matching, and sensor information on the electronic device 101. That is, the matching unit 608 may determine whether the users of the matching failed iris image and the matching succeeded iris image are the same based on at least one of the cases whether a difference between a time point when the matching succeeded iris image is acquired and a time point when the matching failed iris image is acquired is within a threshold, whether a sensor data difference acquired by the electronic device 101 when the matching succeeded iris image is acquired and the matching succeeded iris image is acquired is within a threshold, and a different from another piece of biometric information on the user when the matching succeeded iris image is acquired and the matching failed iris image is acquired is within a threshold.

The other piece of biometric information on the user may be any biometric information such as a fingerprint, heart rate, face, voice, motion, lines of the palm, blood vessel information, and the like if the same user can be identified through the biometric information. The sensor data acquired by the electronic device 101 may include all pieces of sensor information on an acceleration sensor, a grip sensor, an illumination sensor, a temperature sensor, a microphone sensor, and the like by which a change in the user can be determined. As described herein, when the user authentication is successful, the matching unit 608 may update the registered feature pattern by using the feature pattern of the matching succeeded iris image and store the updated feature pattern in the last step of the iris recognition algorithm.

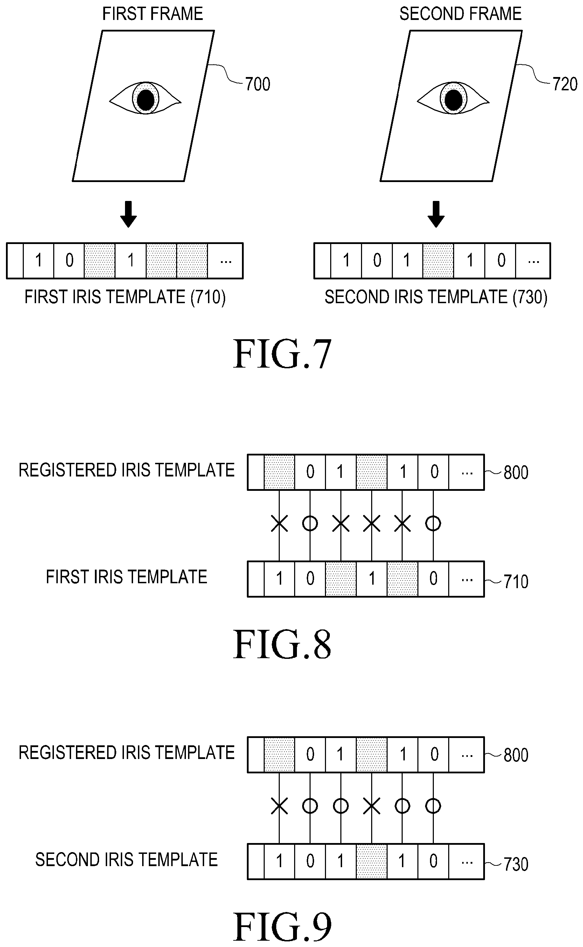

FIG. 7 illustrates an example of a feature pattern of an iris image according to various embodiments of the present disclosure. Referring to FIG. 7, when the camera module is driven for iris recognition, one frame is entered through the image sensor 340 about every 65 ms. Some of a plurality of biometric images corresponding to a series of successively entered biometric images may be used for the iris recognition. Hereinafter, an example will be described in which a first frame 700 of the iris image generated by photographing the eye part is entered and a second frame 720 is entered successively after the first frame 700 among the biometric images.

When it is determined that the eye area exists in each of the first frame 700 and the second frame 720, the controller may extract an iris area based on a pupil extraction algorithm, a boundary detection algorithm, an iris detection algorithm, and the like. Subsequently, the controller may segment and then code the iris area to determine a feature point of the iris area, and templates generated for the first frame 700 and the second frame 720 may be referred to as a first iris template 710 and a second iris template 730, respectively. In FIG. 7, the first iris template 710 and the second iris template 730 may be the parts of the whole template. The numbers or values "1" and "0" in FIG. 7 are only for examples for helping with understanding of the present disclosure, and the used values may be different from real values since an actual algorithm has many more values as the templates.

FIGs. 8 and 9 illustrate an operation for a comparison with a registered iris template according to various embodiments of the present disclosure. In FIG.s 8 and 9, a registered iris template 800 may be a feature pattern which has been coded from the iris image of one frame and then stored in the enrollment step. At this time, the registered feature pattern may be at least a part or entirety of the whole feature pattern of the biometric image of the user, but FIGs. 8 and 9 illustrate the part of the stored feature pattern. A matching process of comparing the registered iris template 800 and the first iris template 710 will be described below with reference to FIG. 8.

In FIG. 8, when the first iris template 710 is photographed in a hidden state due to an eyelid, light reflection, or the like, the first iris template 710 may have ineffective information, that is, an ineffective section (gray field) value, and at least some feature points of the registered iris template 800 do not correspond to feature points of the first iris template 710 and thus the comparison may not be performed. FIG. 8 illustrates a case where two pieces of matching data exist in six pieces of comparable data and, accordingly, a matching ratio may be 33%. When it is assumed that a threshold ratio for authentication success is about 65%, the user of the first iris template 710 may fail the authentication in spite of the user is the registered user.

Subsequently, an operation same as the comparison operation, which has been performed on the first iris template 710, may be performed on the second iris template 730. FIG. 9 illustrates a case where four pieces of matching data exist in six pieces of comparable data. In this case, a matching ratio may be 67%. Since the matching ratio corresponds to a threshold ratio 65% or more, the user of the second iris template 730 may succeed the authentication.

At this time, when the first iris template 710 and the second iris template 730 correspond to biometric information on the same user, the first iris template 720 may be False Reject. According to various embodiments of the present disclosure, the registered feature pattern may be updated using False Reject information and, when information such as the first iris template 710 is input later, the False Reject may not be made.

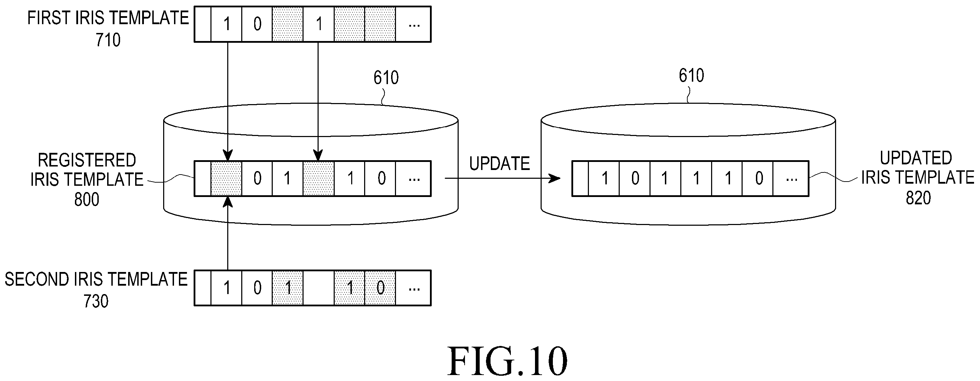

FIG. 10 illustrates a method of updating a registered iris template according to various embodiments of the present disclosure. Referring to FIG. 10, when the second iris template 730 and the registered iris template 800 have the same feature points larger than or equal to a threshold ratio based on a comparison therebetween, the registered iris template 800 may be updated by adding at least one feature point of the second iris template 730 to the registered iris template 800. At this time, according to various embodiments of the present disclosure, when the second iris template 730 matches the registered iris template 800, it is determined whether the first iris template 710 continuously connected to the second iris template 730 is related to the same user even though the first iris template 710 does not have the same feature points as those of the registered iris template 800 by a predetermined ratio or more. When the first iris template 710 is related to the same user, at least one feature point of the first iris template 710 may be also added to the registered iris template 800 and the registered iris template 800 may be updated as indicated by reference numeral 820 and stored.

The empty feature point parts of the registered iris template 800 may be filled up with at least one feature point of the matching failed first iris template 710 and at least one feature point of the second iris template 730 through the update operation. Based on such a learning process, it is possible to reduce the FRR, thereby improving a recognition rate. Accordingly, even though biometric information, which is relatively more unclear than the registered biometric information, is acquired, an authentication success rate can increase because the authentication is performed based on updated biometric information.

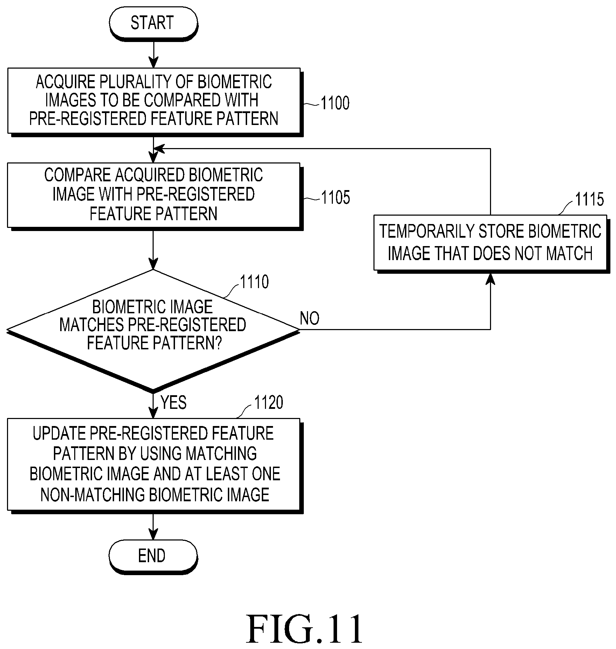

FIG. 11 is a flowchart illustrating an operation of updating registered biometric information according to various embodiments of the present disclosure. Referring to FIG. 11, the electronic device 101 may acquire a plurality of biometric images to be compared with a pre-registered feature pattern in operation 1100. Subsequently, in operation 1105, the pre-registered feature pattern and feature patterns of the acquired biometric images are compared. The electronic device 101 determines whether the feature pattern of the acquired biometric image matches the pre-registered feature pattern in operation 1110, and temporarily stores a non-matching biometric image in operation 1115. The electronic device 101 may perform the operation for the comparison with the next biometric image by returning to operation 1105.

Accordingly, the electronic device 101 may determine whether the feature pattern of the next biometric image matches the pre-registered feature pattern in operation 1110. At this time, the number of biometric images, which are compared with the pre-registered feature pattern, may vary depending on characteristics of the electronic device. When there is the matching feature pattern of the biometric image, the electronic device 101 may update the pre-registered feature pattern by using the matching biometric image and at least one non-matching biometric image in operation 1120. For example, when there are three biometric images to be compared and one of them succeeds the matching, the electronic device 101 may update the pre-registered feature pattern by using at least one feature point of the feature pattern of the matching failed biometric image successively connected to the matching succeeded biometric image and the feature patterns of the remaining two matching failed biometric images. As described herein, the feature pattern of the biometric image to be used for updating the pre-registered feature pattern among the matching failed biometric images may be determined according to various references.

According to various embodiments of the present disclosure, the electronic device 101 may determine which feature pattern of biometric image will be used for updating the pre-registered feature pattern among the matching failed biometric images based on at least one of the cases whether a difference between a time point when the matching succeeded biometric image is acquired and a time point when the matching failed biometric image is acquired is within a threshold, whether a sensor data difference acquired by the electronic device 101 when the matching succeeded biometric image is acquired and the matching succeeded biometric image is acquired is within a threshold, and a difference from another piece of biometric information on the user when the matching succeeded biometric image is acquired and the matching succeeded biometric image is acquired is within a threshold. Hereinafter, among the biometric images, the iris image will be described as an example.

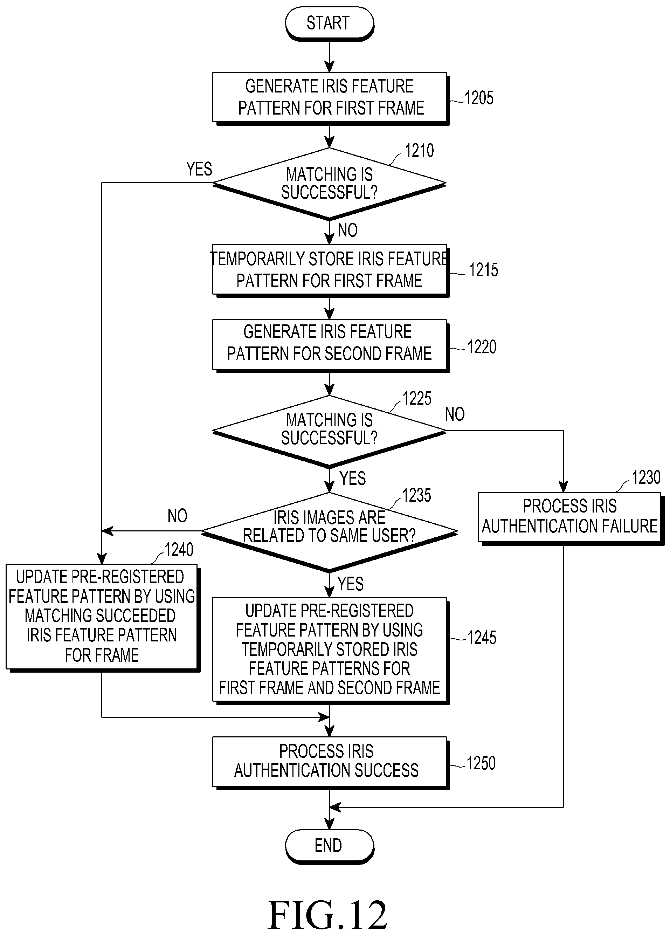

FIG. 12 is a flowchart illustrating an operation of updating a registered iris image according to various embodiments of the present disclosure. Referring to FIG. 12, the electronic device 101 may generate an iris feature pattern for a first frame in operation 1205. The electronic device 101 may compare the registered iris feature pattern and the iris feature pattern for the first frame to determine whether the matching is successful in operation 1210. That is, the electronic device 101 may determine whether feature points of the feature patterns match each other by a predetermined ratio or more. When the matching is successful, the electronic device 101 may update the registered iris feature pattern by using the iris feature pattern for the matching succeeded frame, for example, the first frame in operation 1240.

When the matching fails in operation 1210, that is, when the feature points of the feature patterns match each other by a ratio smaller than the predetermined ratio, the electronic device 101 may temporarily store the iris feature pattern for the first frame in operation 1215. At this time, the form of the temporarily stored iris feature pattern for the first frame may not be limited to an image form, that is, a raw data form, a form of processed data generated by extracting only the iris part, or a coded template form.

Subsequently, the electronic device 101 may generate an iris feature pattern for a second frame in operation 1220, and determine whether the matching is successful in operation 1225. At this time, when the matching fails, a predetermined number of feature patterns, for example, two iris feature patterns all fail, so that iris recognition is processed as failure in operation 1230. When the iris feature pattern for the second frame matches the registered iris feature pattern by the predetermined ratio or more, it may be determined that the matching is successful in operation 1225. Accordingly, in operation 1235, it may be determined whether the temporarily stored iris feature pattern for the first frame corresponds to the iris image related to the same user as that of the iris feature pattern for the second frame which has succeeded the matching. When it is determined that the user is not the same, the electronic device 101 may update the registered iris feature pattern by using only the iris feature pattern for the matching succeeded frame, for example, the second frame in operation 1240. When it is determined that the iris images are related to the same user in operation 1245, the electronic device may update the registered iris feature pattern by using the temporarily stored iris feature patterns for the first frame and the second frame.

According to an embodiment, when the iris feature pattern for the second frame matches the registered iris feature pattern by the predetermined ratio or more in operation 1225, the electronic device 101 may reduce the predetermined ratio and then compare a matching ratio between the iris feature pattern for the first frame and the registered iris feature pattern based on the reduced threshold ratio and, when the matching ratio is larger than or equal to the reduced threshold ratio, update the registered iris feature pattern by using the iris feature pattern for the first frame.

According to an embodiment, the electronic device 101 may update the registered iris feature pattern by using at least one feature point of the iris feature patterns for the matching succeeded second frame and the matching failed first frame. However, when it is determined that the iris feature patterns correspond to iris images related to the same user, the electronic device 101 may update the iris feature pattern for the second frame by using the iris feature pattern for the first frame and then add at least one feature point of the updated iris feature pattern for the second frame to the registered iris feature pattern to update the registered iris feature point.

Then, in operation 1250, the electronic device 101 may perform an operation according to the iris authentication success. At this time, after processing the iris authentication success, the electronic device 101 may update the registered iris feature pattern and an operation order thereof is not limited to the above. Further, the operation according to the iris authentication success may include functions such as unlocking, application execution, payment approval, data transmission, and the like.

Meanwhile, although the case where an operation for matching each of the first frame and the second frame with the registered iris feature pattern is performed has been described as an example. However, through a comparison between each of the iris feature patterns of the first frame and the second frame and the registered iris feature pattern, if it is determined that the iris feature patterns are related to the same user, the electronic device 101 may update the iris feature pattern of the second frame by using at least a part of the iris feature pattern of the first frame. Subsequently, the present disclosure may be implemented to perform an operation of matching the updated iris feature pattern of the second frame and the registered iris feature pattern and, when the matching is successful, performing an automatic update.

Meanwhile, whether to use the temporarily stored iris feature pattern for the frame for updating the registered iris feature pattern may be determined based on a correlation with the matching succeeded frame. That is, based on the determination that the matching succeeded frame and the matching failed frame are related to the same user, even the matching failed frame may be used for updating the registered iris feature pattern. The determination on the same user may be performed largely based on three references.

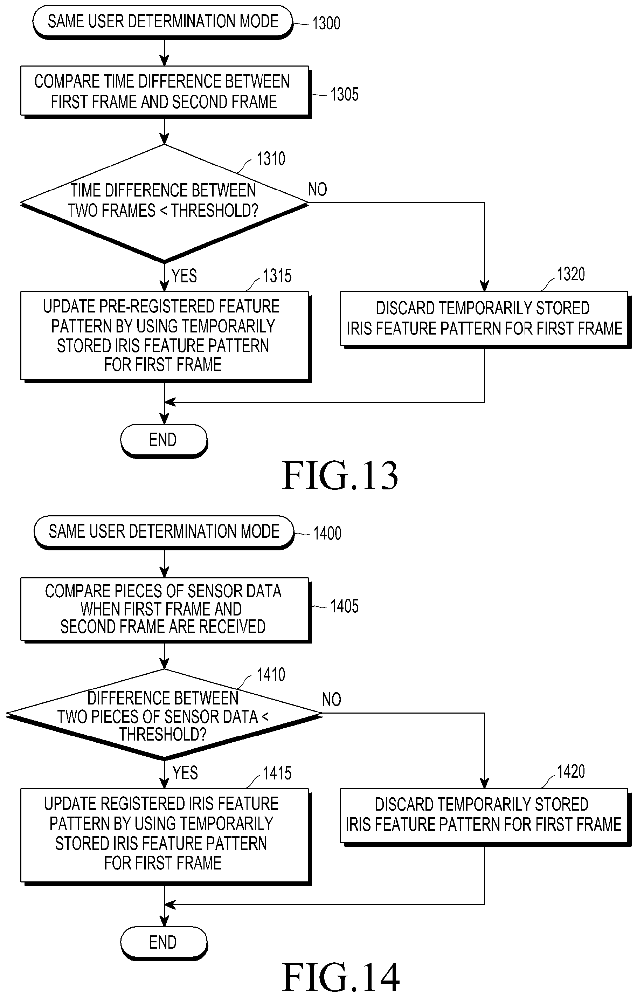

FIGs. 13, 14, and15 are flowcharts illustrating an operation for determining whether iris images are related to the same user according to various embodiments of the present disclosure. A same user mode may be used for describing operations 1235 of FIG. 12 in detail. Referring to FIG. 13, the electronic device 101 may compare a time difference between the first frame and the second frame in operation 1305 in a same user determination mode of operation 1300. That is, the electronic device 101 may compare a difference between a time point when the first frame is photographed and a time point when the second frame is photographed. When the time difference between the two frames is smaller than a threshold in operation 1310, the electronic device 101 may update the registered iris feature pattern by using the temporarily stored iris feature pattern for the first frame in operation 1315. When the time difference between the two frames is larger than or equal to the threshold, the electronic device 101 may consider that iris feature pattern for the first frame is not an effective iris feature pattern and discard the temporarily stored iris feature pattern for the first frame in operation 1320. Although FIG. 13 describes, as an example, a case where the first frame entered before the second frame does not match and thus has been temporarily stored to be used for the update, any frame can be used for the update if the frame has a time difference smaller than the threshold based on the second frame among the matching failed frames.

Referring to FIG. 14, the electronic device 101 may compare sensor data when the first frame and the second frame are received in operation 1405 in a same user determination mode of operation 1400. That is, when a difference between a sensor value of the electronic device 101 when the first frame is input and a sensor value when the second frame is input is smaller than a threshold, it is assumed that the user is using the electronic device 101 without any movement. Accordingly, when the difference between the sensor values is smaller than the threshold in operation 1410, the electronic device 101 may update the registered iris feature pattern by using the temporarily stored iris feature pattern for the first frame. When the difference between the sensor values is larger than or equal to the threshold in operation 1415, it may be assumed that the user who attempts the authentication moves so that the user switches to another user. Accordingly, when the difference between sensor data of two frames is larger than or equal to the threshold, the electronic device 101 may discard the temporarily stored iris feature pattern for the first frame in operation 1420.

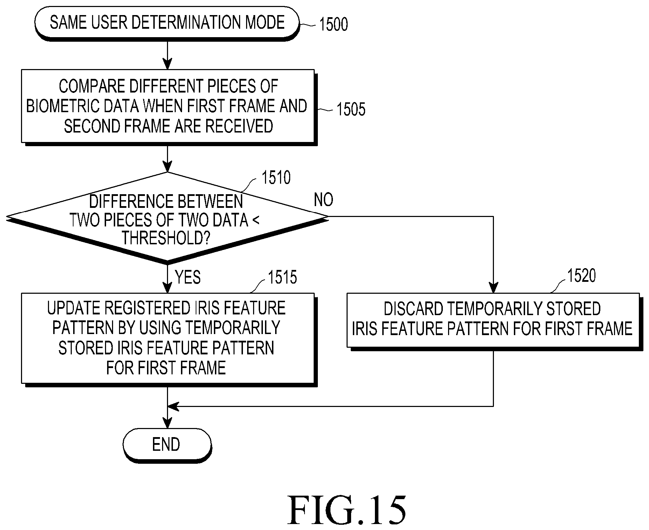

Referring to FIG. 15, the electronic device 101 may compare other pieces of biometric data when the first frame and the second frame are received in operation 1505 in a same user determination mode of operation 1500. Specifically, the electronic device 101 may compare biometric data on the user such as a fingerprint, heart rate, face, voice, motion, lines of the palm, blood vessel information, and the like measured through the sensor of the electronic device 101 when the first frame is input with biometric data on the user measured when the second frame is input. When a difference between two pieces of biometric data is smaller than a threshold in operation 1510, the electronic device 101 may determine that the two pieces of biometric data are related to the same user and, accordingly, update the registered iris feature pattern by using the temporarily stored iris feature pattern for the first frame in operation 1515. When the difference between the two pieces of biometric data is larger than or equal to the threshold in operation 1510, the electronic device 101 may determine that users who attempt the authentication are different from each other. Accordingly, when the difference between sensor data of two frames is larger than or equal to the threshold, the electronic device 101 cannot assume that the two pieces of biometric data are from the same user and thus discard the temporarily stored iris feature pattern for the first frame in operation 1520.

According to various embodiments of the present disclosure, whether to use the temporarily stored iris feature pattern for the frame for updating the registered iris feature pattern may be determined based on one of the above described methods, but may be determined based on a combination of two or more thereof. For example, combinations of various methods of simultaneously identifying the time difference and the sensor information or identifying the time difference and then re-identifying other biometric information may be used. Meanwhile, among the biometric images, the fingerprint image will be described as an example.

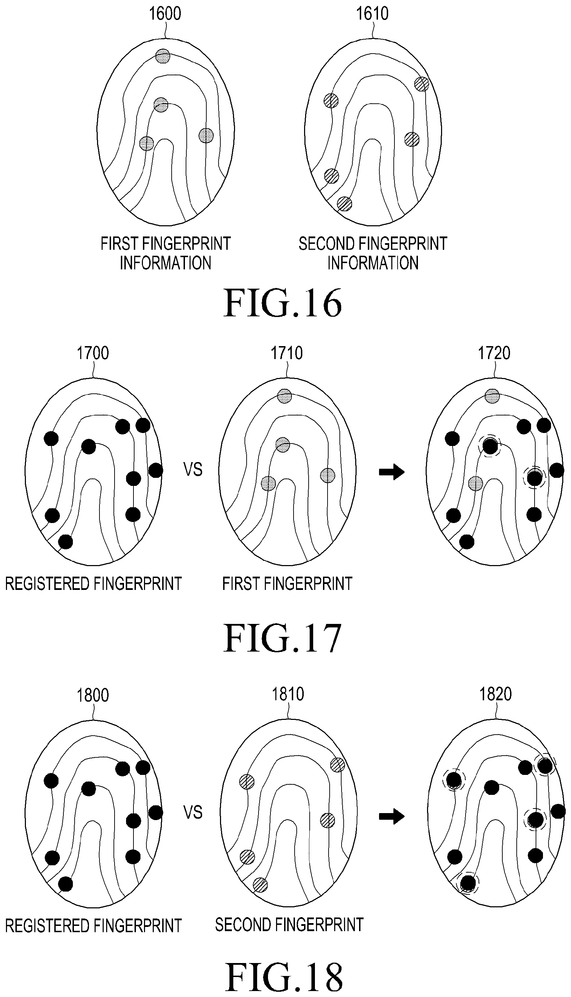

FIG. 16 illustrates an example of a feature pattern of a fingerprint image according to various embodiments of the present disclosure. The electronic device 101 may include a fingerprint sensor for receiving a fingerprint image, and may determine one or more feature extraction areas in the input fingerprint image and extract feature information from the feature extraction areas as illustrated in FIG. 16. Here, the number of feature extraction areas may be two or more. For example, in a single finger, the feature extraction area corresponds to a fingerprint area, a knuckle area, and the like. In a single hand, the feature extraction area corresponds to a fingerprint area, knuckle area, wrinkles of a palm, and the like.

FIG. 16 illustrates a case where feature points are extracted from the fingerprint areas, and actual contact areas may vary depending on a contact intensity, a tilt direction, and the like of a fingerprint of the same finger. Due to factors such as foreign materials on the hand, high humidity, or injury in the hand, some feature points may not be extracted. Accordingly, even feature points extracted from the same fingerprint may vary as illustrated in FIG. 16. At this time, in FIG. 16, it is assumed that a first fingerprint template 1600 and a second fingerprint template 1610 are extracted from a series of successively input fingerprint images and the first fingerprint template 1600 and the second fingerprint template 1610 may be a part of the whole template. The feature points illustrated in FIG. 16 are only examples for helping with understanding of the present disclosure, and the example values may be different from actual values since an actual algorithm has many more feature values as the template. When the fingerprint sensor is driven for fingerprint recognition, a fingerprint area is received in one image form. It may be assumed that information input in a first attempt is a first fingerprint template 1600 and information input in a second attempt is a second fingerprint template 1610.

FIGs. 17 and 18 illustrate an operation for a comparison with a registered fingerprint according to various embodiments of the present disclosure. The registered feature pattern may be at least a part or entirety of the whole feature pattern of the fingerprint image of the user, but FIGs. 17 and 18 illustrate the part of the stored feature pattern. Referring to FIG. 17, through a comparison between the registered fingerprint template 1700 and the first fingerprint template 1710, there are two matching feature points among nine comparable feature points as illustrated in a template 1720 corresponding to the comparison between the two templates, and thus a matching ratio is 22%. At this time, when it is assumed that a threshold ratio indicating authentication success is about 50%, the user for the first fingerprint template 1710 may fail the authentication in spite of the user is the registered user.

Referring to FIG. 18, through a comparison between a registered fingerprint template 1800 and a second fingerprint template 1810, there are four matching feature points among nine comparable feature points as illustrated in a template 1820 corresponding to the comparison between the two templates, and thus a matching ratio is 55%. Accordingly, the user for the second fingerprint template 1810 may succeed the authentication. As described herein, when the first fingerprint template 1710 and the second fingerprint template 1810 are related to the same user, the authentication failure of the first fingerprint template 1710 corresponds to false reject, and the update may be performed by reflecting the false reject information in the registered fingerprint template.

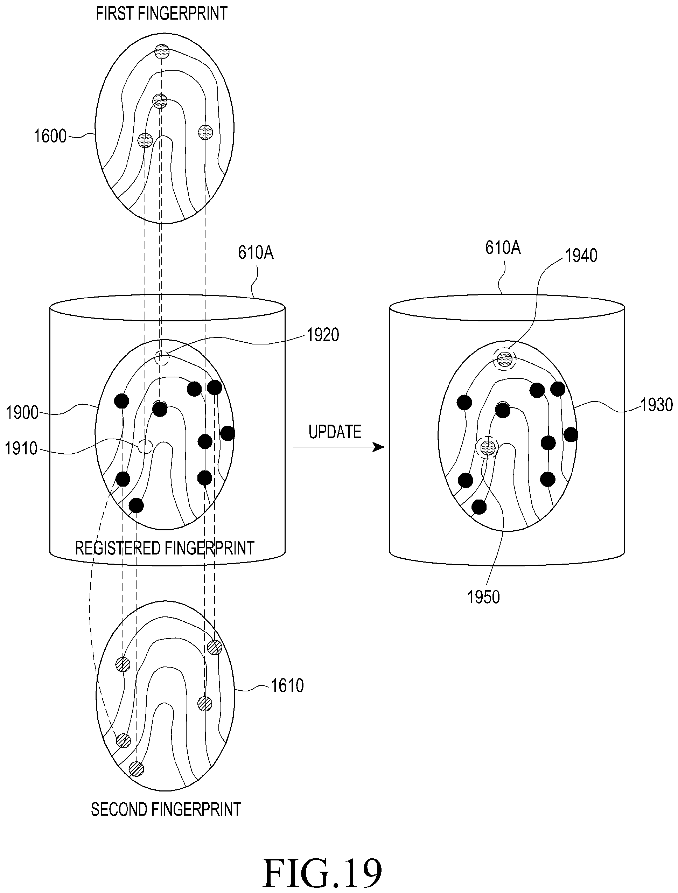

FIG. 19 illustrates a method of updating a registered fingerprint according to various embodiments of the present disclosure. When the second fingerprint template 1610 and a registered fingerprint template 1900, from the finger print DB 610A, have the same feature points larger than or equal to a threshold ratio based on a comparison therebetween, the registered fingerprint template 1900, extracted from the finger print DB 610A, may be updated by adding at least one feature point of the second fingerprint template 1610 to the registered fingerprint template 1900. At this time, according to various embodiments of the present disclosure, when the second fingerprint template 1610 matches the registered fingerprint template 1900, it is determined whether the first fingerprint template 1600 successively connected to the second fingerprint template 1610 is related to the same user even though the first fingerprint template 1600 does not have the same feature points as those of the registered fingerprint template 1900 by a predetermined ratio or more. When the first fingerprint template 1600 is related to the same user, one or more feature points 1910 and 1920 of the first fingerprint template 1600 may be also added to the registered fingerprint template 1900. Accordingly, the registered fingerprint template 1930 may be updated by the matching succeeded feature points of the second fingerprint template 1610, but empty feature point parts 1940 and 1950 of the registered fingerprint template 1930, which are not filled up with the feature points of the second fingerprint template 1610, may be filled up with one or more feature points of the first fingerprint template 1600. Based on such a learning process, it is possible to reduce the FRR, thereby improving a recognition rate. Accordingly, even though biometric information, which is relatively unclear than the registered biometric information, is acquired, an authentication success rate can increase because the authentication is performed based on updated biometric information.

Although the iris image among the biometric images and the update operation using the biometric image when the authentication is performed have been described, a different biometric image other than the biometric image may be applied for updating the registered biometric feature pattern.

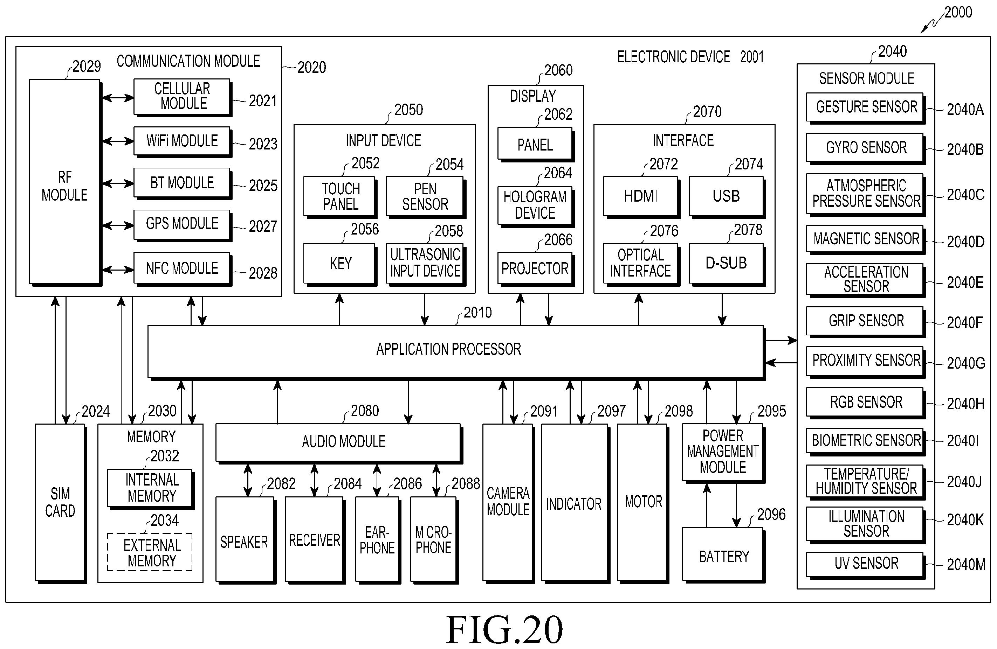

FIG. 20 is a block diagram 2000 of an electronic device according to various embodiments of the present disclosure. For example, an electronic device 2001 may include the entirety or a part of the electronic device 101 illustrated in FIG. 1. The electronic device 2001 may include at least one Application Processor (AP) 2010, a communication module 2020, a Subscriber Identification Module (SIM) card 2024, a memory 2030, a sensor module 2040, an input device 2050, a display 2060, an interface 2070, an audio module 2080, a camera module 2091, a power management module 2095, a battery 2096, an indicator 2097, and a motor 2098.

The AP 2010 may control a plurality of hardware or software components connected thereto by driving an operating system or an application program and perform a variety of data processing and calculations. The AP 2010 may be implemented by, for example, a System on Chip (SoC). According to an embodiment of the present disclosure, the AP 2010 may further include a Graphical Processing Unit (GPU) and/or an image signal processor. The AP 2010 may also include at least some (for example, a cellular module 2021) of the components illustrated in FIG. 20. The AP 2010 may load instructions or data, received from at least one other component (for example, a non-volatile memory), in a volatile memory to process the loaded instructions or data, and may store various types of data in a non-volatile memory. The communication module 2020 may have a configuration equal or similar to that of the communication interface 170 of FIG. 1. The communication module 2020 may include, for example, a cellular module 2021, a Wi-Fi module 2023, a BT module 2025, a GPS module 2027, an NFC module 2028, and a Radio Frequency (RF) module 2029.

The cellular module 2021 may provide, for example, a voice call, an image call, a text message service, or an Internet service through a communication network. According to an embodiment, the cellular module 2021 may distinguish between and authenticate electronic devices 2001 within a communication network, using a subscriber identification module (for example, the SIM card 2024). According to an embodiment of the present disclosure, the cellular module 2021 may perform at least some of the functions which may be provided by the AP 2010. According to an embodiment, the cellular module 2021 may include a Communication Processor (CP).

The Wi-Fi module 2023, the BT module 2025, the GPS module 2027, and the NFC module 2028 may include, for example, a processor for processing data transmitted/received through the corresponding module. According to some embodiments, at least some (two or more) of the cellular module 2021, the Wi-Fi module 2023, the BT module 2025, the GPS module 2027, and the NFC module 2028 may be included in one Integrated Chip (IC) or IC package.

The RF module 2029 may transmit/receive, for example, a communication signal (for example, an RF signal). The RF module 2029 may include, for example, a transceiver, a Power Amplifier Module (PAM), a frequency filter, a Low Noise Amplifier (LNA), an antenna, or the like. According to another embodiment, at least one of the cellular module 2021, the Wi-Fi module 2023, the BT module 2025, the GPS module 2027, and the NFC module 2028 may transmit/receive an RF signal through a separate RF module 2029. The SIM card 2024 may include, for example, a card including a subscriber identity module and/or an embedded SIM card, and may include inherent identification information (for example, an Integrated Circuit Card Identifier (ICCID)) or subscriber information (for example, an International Mobile Subscriber Identity (IMSI)).

The memory 2030 (for example, the memory 130) may include, for example, an internal memory 2032 or an external memory 2034. The internal memory 2032 may include at least one of, for example, a volatile memory (for example, a Dynamic Random Access Memory (DRAM), a Static RAM (SRAM), a Synchronous Dynamic RAM (SDRAM), and the like) and a non-volatile memory (for example, an One Time Programmable Read Only Memory (OTPROM), a Programmable ROM (PROM), an Erasable and Programmable ROM (EPROM), an Electrically Erasable and Programmable ROM (EEPROM), a mask ROM), a flash memory (for example, a NAND flash memory, a NOR flash memory, or the like), a hard driver, or a Solid State Drive (SSD). The external memory 2034 may further include a flash drive, for example, a compact flash (CF), a secure digital (SD), a micro secure digital (Micro-SD), a mini secure digital (Mini-SD), an extreme digital (xD), a Memory Stick, or the like. The external memory 2034 may be functionally and/or physically connected to the electronic device 2001 through various interfaces.

The sensor module 2040 may, for example, measure a physical quantity or detect an operation state of the electronic device 2001, and may convert the measured or detected information into an electric signal. The sensor module 2040 may include at least one of, for example, a gesture sensor 2040A, a gyro sensor 2040B, an atmospheric pressure sensor 2040C, a magnetic sensor 2040D, an acceleration sensor 2040E, a grip sensor 2040F, a proximity sensor 2040G, a color sensor 2040H (for example, a Red/Green/Blue (RGB) sensor), a biometric sensor 2040I, a temperature/humidity sensor 2040J, an illumination sensor 2040K, and an Ultra Violet (UV) sensor 2040M. Additionally or alternatively, the sensor module 2040 may include, for example, an E-nose sensor, an electromyography (EMG) sensor, an electroencephalogram (EEG) sensor, an electrocardiogram (ECG) sensor, an Infrared (IR) sensor, an iris sensor, and/or a fingerprint sensor. The sensor module 2040 may further include a control circuit for controlling one or more sensors included therein. In some embodiments, the electronic device 2001 may further include a processor configured to control the sensor module 2040 as a part of or separately from the processor 2010, and may control the sensor module 2040 while the processor 2010 is in a sleep state.

The input device 2050 may include, for example, a touch panel 2052, a (digital) pen sensor 2054, a key 2056, or an ultrasonic input device 2058. The touch panel 2052 may use at least one of, for example, a capacitive type, a resistive type, an infrared type, and an ultrasonic type. The touch panel 2052 may further include a control circuit. The touch panel 2052 may further include a tactile layer and provide a tactile reaction to a user.

The (digital) pen sensor 2054 may include, for example, a recognition sheet which is a part of the touch panel 2052 or a separate recognition sheet. The key 2056 may include, for example, a physical button, an optical key, or a keypad. The ultrasonic input unit 2058 may input data through an input means that generates an ultrasonic signal, and the electronic device 2001 identify data by detecting a sound wave with a microphone (for example, a microphone 2088).

The display 2060 (for example, the display 160) may include a panel 2062, a hologram device 2064, or a projector 2066. The panel 2062 may include a component equal or similar to the display 160 of FIG. 1. The panel 2062 may be implemented to be, for example, flexible, transparent, or wearable. The panel 2062 may also be configured to be integrated with the touch panel 2052 as a single module. The hologram device 2064 may show a three dimensional image in the air by using an interference of light. The projector 2066 may project light onto a screen to display an image. For example, the screen may be located inside or outside the electronic device 2001. According to an embodiment of the present disclosure, the display 2060 may further include a control circuit for controlling the panel 2062, the hologram device 2064, or the projector 2066.

The interface 2070 may include, for example, a High-Definition Multimedia Interface (HDMI) 2072, a Universal Serial Bus (USB) 2074, an optical interface 2076, and a D-subminiature (D-sub) 2078. The interface 2070 may be included in, for example, the communication interface 170 shown in FIG. 1. Additionally or alternatively, the interface 2070 may include, for example, a mobile high-definition link (MHL) interface, a secure digital (SD) card/multi-media card (MMC) interface, or an infrared data association (IrDA) standard interface.

The audio module 2080 may bilaterally convert, for example, a sound and an electrical signal. At least some components of the audio module 2080 may be included in, for example, the input/output interface 150 illustrated in FIG. 1. The audio module 2080 may process sound information which is input or output through, for example, a speaker 2082, a receiver 2084, earphones 2086, a microphone 2088, or the like.

The camera module 2091 is, for example, a device capable of capturing a still image and a moving image. According to an embodiment, the camera module 2091 may include one or more image sensors (for example, a front sensor or a back sensor), a lens, an Image Signal Processor (ISP), and a flash (for example, an LED, a xenon lamp, or the like).

The power management module 2095 may manage, for example, power of the electronic device 2001. According to an embodiment, the power management module 2095 may include a Power Management Integrated Circuit (PMIC), a charger IC, or a battery or fuel gauge. The PMIC may use a wired and/or wireless charging method. Examples of the wireless charging method may include, for example, a magnetic resonance scheme, a magnetic induction scheme, an electromagnetic wave scheme, and the like. Further, the power management module 295 may further include additional circuits, for example, a coil loop, a resonance circuit, a rectifier, or the like for wireless charging. The battery fuel gauge may measure, for example, the remaining amount of battery, a charging voltage and current, or temperature. The battery 2096 may include, for example, a rechargeable battery and/or a solar battery.

The indicator 2097 may indicate particular status of the electronic device 2001 or a part thereof (for example, the AP 2010), for example, a booting status, a message status, a charging status, or the like. The motor 2098 may convert an electrical signal into mechanical vibration, and can generate vibration, a haptic effect, or the like. Although not illustrated, the electronic apparatus 2001 may include a processing unit (for example, a GPU) for supporting a mobile television (TV). The processing unit for supporting mobile TV may process, for example, media data pursuant to a certain standard of Digital Multimedia Broadcasting (DMB), Digital Video Broadcasting (DVB), or media flow.

Each of the above-described elements of the electronic device 2001 may be implemented by one or more components and the name of the corresponding element may vary depending on the type of the electronic device 2001. In various embodiments of the present disclosure, the electronic device 2001 may include at least one of the above-described elements, and may exclude some of the elements or further include other additional elements. Further, some of the elements of the electronic device 2001 according to various embodiments may be combined into one entity, so that the functions of the corresponding elements may be performed in the same way as those before they are combined.

The "module" used in various embodiments of the present disclosure may refer to, for example, a "unit" including one of hardware, software, and firmware, or a combination of two or more of the hardware, software, and firmware. The "module" may be interchangeably used with a term, such as unit, logic, logical block, component, or circuit. The "module" may be the smallest unit of an integrated component or a part thereof. The "module" may be the smallest unit that performs one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter.

It will be appreciated that the exemplary embodiments of the present disclosure may be implemented in a form of hardware, software, or a combination of hardware and software. Any such software may be stored, for example, in a volatile or non-volatile storage device such as a ROM, a memory such as a RAM, a memory chip, a memory device, or a memory IC, or a recordable optical or magnetic medium such as a CD, a DVD, a magnetic disk, or a magnetic tape, regardless of its ability to be erased or its ability to be re-recorded. It is appreciated that the storage unit included in the electronic device is one example of the machine-readable storage media suitable for storing a program or programs including commands for implementing various embodiments of the present disclosure. Accordingly, the present disclosure includes a program that includes a code for implementing an apparatus or a method defined in any claim in the present specification and a machine-readable storage medium that stores such a program. Further, the program may be electronically transferred by a predetermined medium such as a communication signal transferred through a wired or wireless connection, and the present disclosure appropriately includes equivalents of the program.

Further, the electronic device can receive the program from a program providing apparatus connected to the device wirelessly or through a wire and store the received program. The program providing apparatus may include a memory for storing a program containing instructions to perform a method of updating a biometric feature pattern and information required for the method of updating the biometric feature pattern, a communication unit for performing wired or wireless communication with the electronic device, and a controller for transmitting the corresponding program to the electronic device according to a request of the electronic device or automatically.

## Claims

1. A method of updating a biometric feature pattern, the method comprising:
acquiring (1100), via a sensor, a plurality of successive biometric images associated with a same type of a biometric object, each of the successive biometric images comprising a feature pattern that comprises feature points, wherein the biometric object is one of an iris or a fingerprint, wherein the plurality of successive biometric images comprises a first biometric image and a second biometric image, wherein the second biometric image is acquired after the first biometric image is acquired;
comparing (1105, 1210) a feature pattern of the first biometric image with a pre-registered feature pattern to determine (1110) whether the feature pattern of the first biometric image matches the pre-registered feature pattern by a predetermined ratio or more;
in response to determining that the feature pattern of the first biometric image matches the pre-registered feature pattern by the predetermined ratio or more, updating (1120,1240) the pre-registered feature pattern by adding at least one feature point of the feature pattern of the first biometric image to empty feature point parts of the pre-registered feature pattern;
in response to determining that the feature pattern of the first biometric image does not match the pre-registered feature pattern by the predetermined ratio or more, temporarily storing the first biometric image;
comparing (1105, 1210) a feature pattern of the second biometric image with the pre-registered feature pattern to determine (1110) whether the feature pattern of the second biometric image matches the pre-registered feature pattern by the predetermined ratio or more, wherein in response to determining that the feature pattern of the second biometric image does not match the pre-registered feature pattern by the predetermined ratio or more, the updating is processed as failure (123;
in response to determining that the feature pattern of the second biometric image matches the pre-registered feature pattern by the predetermined ratio or more and in response to determining (1235) that the temporarily stored first biometric image and the second biometric image correspond to a same user, updating (1120, 1245) the pre-registered feature pattern by adding at least one feature point of the feature pattern of the first biometric image and at least one feature point of the feature pattern of the second biometric image to empty feature point parts of the pre-registered feature pattern,
wherein determining that the temporarily stored first biometric image and the second biometric image correspond to the same user comprises:
determining a time difference between a time point when the first biometric image is acquired and a time point when the second biometric image is acquired, wherein the temporarily stored first biometric image and the second biometric image correspond to the same user in case the time difference between the two frames is smaller than a threshold.

2. The method of claim 1, wherein the temporarily stored first biometric image and the second biometric image correspond to the same user in case a sensor value difference between a sensor value of the electronic device when the first biometric image is acquired and a sensor value when the second biometric image is acquired is smaller than a sensor threshold.

3. The method of claim 1, wherein the temporarily stored first biometric image and the second biometric image correspond to the same user in case a biometric data difference between a piece of biometric data of the user acquired through the sensor, when the first biometric image is acquired, with a piece of biometric data of the user acquired through the sensor, when the second biometric image is acquired, is smaller than a threshold.

4. An electronic device (101) for updating a biometric feature pattern, the electronic device comprising:
a memory (380);
a sensor (340); and
a controller (310) configured to:
acquire, via the sensor (340), a plurality of successive biometric images associated with a same type of a biometric object, each of the successive biometric images comprising a feature pattern that comprises feature points, wherein the biometric object is one of an iris or a fingerprint, wherein the plurality of successive biometric images comprises a first biometric image and a second biometric image, wherein the second biometric image is acquired after the first biometric image is acquired;
compare (1105, 1210) a feature pattern of the first biometric image with a pre-registered feature pattern on the user stored in the memory to determine (1110) whether the feature pattern of the first biometric image matches the pre-registered feature pattern by a predetermined ratio or more;
in response to determining that the feature pattern of the first biometric image matches the pre-registered feature pattern by the predetermined ratio or more, update (1120,1240) the pre-registered feature pattern by adding at least one feature point of the feature pattern of the first biometric image to empty feature point parts of the pre-registered feature pattern;
in response to determining that the feature pattern of the first biometric image does not match the pre-registered feature pattern by the predetermined ratio or more, temporarily store the first biometric image,
compare (1105, 1210) a feature pattern of the second biometric image with the pre-registered feature pattern to determine (1110) whether the feature pattern of the second biometric image matches the pre-registered feature pattern by the predetermined ratio or more, wherein in response to determining that the feature pattern of the second biometric image does not match the pre-registered feature pattern by the predetermined ratio or more, the updating is processed as failure (1230); and
in response to determining that the feature pattern of the second biometric image matches the pre-registered feature pattern by the predetermined ratio or more and in response to determining (1235) that the temporarily stored first biometric image and the second biometric image correspond to a same user, update (1120, 1245) the pre-registered feature pattern by adding at least one feature point of the feature pattern of the first biometric image and at least one feature point of the feature pattern of the second biometric image to empty feature point parts of the pre-registered feature pattern,
wherein determining that the temporarily stored first biometric image and the second biometric image correspond to the same user comprises:
determining a time difference between a time point when the first biometric image is acquired and a time point when the second biometric image is acquired, wherein the temporarily stored first biometric image and the second biometric image correspond to the same user in case the time difference between the two frames is smaller than a threshold.

5. The electronic device of claim 4, wherein the temporarily stored first biometric image and the second biometric image correspond to the same user in case a sensor value difference between a sensor value of the electronic device when the first biometric image is acquired and a sensor value when the second biometric image is acquired is smaller than a sensor threshold.

6. The electronic device of claim 4, wherein the temporarily stored first biometric image and the second biometric image correspond to the same user in case a biometric data difference between a piece of biometric data of the user acquired through the sensor, when the first biometric image is acquired, with a piece of biometric data of the user acquired through the sensor, when the second biometric image is acquired, is smaller than a threshold.

## Patentansprüche

1. Verfahren zum Aktualisieren eines biometrischen Merkmalsmusters, wobei das Verfahren Folgendes umfasst:
Erfassen (1100) einer Vielzahl aufeinanderfolgender biometrischer Bilder, die mit demselben Typ eines biometrischen Objekts assoziiert sind, über einen Sensor, wobei jedes der aufeinanderfolgenden biometrischen Bilder ein Merkmalsmuster umfasst, das Merkmalspunkte umfasst, wobei das biometrische Objekt eine Iris oder ein Fingerabdruck ist, wobei die Vielzahl aufeinanderfolgender biometrischer Bilder ein erstes biometrisches Bild und ein zweites biometrisches Bild umfasst, wobei das zweite biometrische Bild nach dem Erfassen des ersten biometrischen Bildes erfasst wird;
Vergleichen (1105, 1210) eines Merkmalsmusters des ersten biometrischen Bildes mit einem vorab registrierten Merkmalsmuster, um zu bestimmen (1110), ob das Merkmalsmuster des ersten biometrischen Bildes mit dem vorab registrierten Merkmalsmuster um ein vorbestimmtes Verhältnis oder mehr übereinstimmt;
als Reaktion auf das Bestimmen, dass das Merkmalsmuster des ersten biometrischen Bildes mit dem vorab registrierten Merkmalsmuster um das vorbestimmte Verhältnis oder mehr übereinstimmt, Aktualisieren (1120, 1240) des vorab registrierten Merkmalsmusters durch Hinzufügen mindestens eines Merkmalspunkts des Merkmalsmusters des ersten biometrischen Bildes zu leeren Merkmalspunktteilen des vorab registrierten Merkmalsmusters;
als Reaktion auf das Bestimmen, dass das Merkmalsmuster des ersten biometrischen Bildes nicht mit dem vorab registrierten Merkmalsmuster um das vorbestimmte Verhältnis oder mehr übereinstimmt, temporäres Speichern des ersten biometrischen Bildes;
Vergleichen (1105, 1210) eines Merkmalsmusters des zweiten biometrischen Bildes mit dem vorab registrierten Merkmalsmuster, um zu bestimmen (1110), ob das Merkmalsmuster des zweiten biometrischen Bildes mit dem vorab registrierten Merkmalsmuster um das vorbestimmte Verhältnis oder mehr übereinstimmt, wobei als Reaktion auf das Bestimmen, dass das Merkmalsmuster des zweiten biometrischen Bildes nicht mit dem vorab registrierten Merkmalsmuster um das vorbestimmte Verhältnis oder mehr übereinstimmt, die Aktualisierung als Fehler (123) verarbeitet wird;
als Reaktion auf das Bestimmen, dass das Merkmalsmuster des zweiten biometrischen Bildes mit dem vorab registrierten Merkmalsmuster um das vorbestimmte Verhältnis oder mehr übereinstimmt, und als Reaktion auf das Bestimmen (1235), dass das temporär gespeicherte erste biometrische Bild und das zweite biometrische Bild demselben Benutzer entsprechen, Aktualisieren (1120, 1245) des vorab registrierten Merkmalsmusters durch Hinzufügen mindestens eines Merkmalspunkts des Merkmalsmusters des ersten biometrischen Bildes und mindestens eines Merkmalspunkts des Merkmalsmusters des zweiten biometrischen Bildes zu leeren Merkmalspunktteilen des vorab registrierten Merkmalsmusters,
wobei das Bestimmen, dass das temporär gespeicherte erste biometrische Bild und das zweite biometrische Bild demselben Benutzer entsprechen, Folgendes umfasst:
Bestimmen einer Zeitdifferenz zwischen einem Zeitpunkt, zu dem das erste biometrische Bild erfasst wird, und einem Zeitpunkt, zu dem das zweite biometrische Bild erfasst wird, wobei das temporär gespeicherte erste biometrische Bild und das zweite biometrische Bild demselben Benutzer entsprechen, falls die Zeitdifferenz zwischen den beiden Rahmen kleiner als ein Schwellenwert ist.

2. Verfahren nach Anspruch 1, wobei das temporär gespeicherte erste biometrische Bild und das zweite biometrische Bild demselben Benutzer entsprechen, falls eine Sensorwertdifferenz zwischen einem Sensorwert der elektronischen Vorrichtung beim Erfassen des ersten biometrischen Bildes und einem Sensorwert beim Erfassen des zweiten biometrischen Bildes kleiner als ein Sensorschwellenwert ist.

3. Verfahren nach Anspruch 1, wobei das temporär gespeicherte erste biometrische Bild und das zweite biometrische Bild demselben Benutzer entsprechen, falls eine biometrische Datendifferenz zwischen einem Teil von biometrischen Daten des Benutzers, die durch den Sensor erfasst werden, wenn das erste biometrische Bild erfasst wird, und einem Teil von biometrischen Daten des Benutzers, die durch den Sensor erfasst werden, wenn das zweite biometrische Bild erfasst wird, kleiner als ein Schwellenwert ist.

4. Elektronische Vorrichtung (101) zum Aktualisieren eines biometrischen Merkmalsmusters, wobei die elektronische Vorrichtung Folgendes umfasst:
einen Speicher (380);
einen Sensor (340); und
eine Steuerung (310), die zu Folgendem konfiguriert ist:
Erfassen einer Vielzahl aufeinanderfolgender biometrischer Bilder, die mit demselben Typ eines biometrischen Objekts assoziiert sind, über den Sensor (340), wobei jedes der aufeinanderfolgenden biometrischen Bilder ein Merkmalsmuster umfasst, das Merkmalspunkte umfasst, wobei das biometrische Objekt eine Iris oder ein Fingerabdruck ist, wobei die Vielzahl aufeinanderfolgender biometrischer Bilder ein erstes biometrisches Bild und ein zweites biometrisches Bild umfasst, wobei das zweite biometrische Bild nach dem Erfassen des ersten biometrischen Bildes erfasst wird;
Vergleichen (1105, 1210) eines Merkmalsmusters des ersten biometrischen Bildes mit einem in dem Speicher gespeicherten vorab registrierten Merkmalsmuster des Benutzers, um zu bestimmen (1110), ob das Merkmalsmuster des ersten biometrischen Bildes mit dem vorab registrierten Merkmalsmuster um ein vorbestimmtes Verhältnis oder mehr übereinstimmt;
als Reaktion auf das Bestimmen, dass das Merkmalsmuster des ersten biometrischen Bildes mit dem vorab registrierten Merkmalsmuster um das vorbestimmte Verhältnis oder mehr übereinstimmt, Aktualisieren (1120,1240) des vorab registrierten Merkmalsmusters durch Hinzufügen mindestens eines Merkmalspunkts des Merkmalsmusters des ersten biometrischen Bildes zu leeren Merkmalspunktteilen des vorab registrierten Merkmalsmusters;
als Reaktion auf das Bestimmen, dass das Merkmalsmuster des ersten biometrischen Bildes nicht mit dem vorab registrierten Merkmalsmuster um das vorbestimmte Verhältnis oder mehr übereinstimmt, temporäres Speichern des ersten biometrischen Bildes,
Vergleichen (1105, 1210) eines Merkmalsmusters des zweiten biometrischen Bildes mit dem vorab registrierten Merkmalsmuster, um zu bestimmen (1110), ob das Merkmalsmuster des zweiten biometrischen Bildes mit dem vorab registrierten Merkmalsmuster um das vorbestimmte Verhältnis oder mehr übereinstimmt, wobei als Reaktion auf das Bestimmen, dass das Merkmalsmuster des zweiten biometrischen Bildes nicht mit dem vorab registrierten Merkmalsmuster um das vorbestimmte Verhältnis oder mehr übereinstimmt, die Aktualisierung als Fehler (1230) verarbeitet wird; und
als Reaktion auf das Bestimmen, dass das Merkmalsmuster des zweiten biometrischen Bildes mit dem vorab registrierten Merkmalsmuster um das vorbestimmte Verhältnis oder mehr übereinstimmt, und als Reaktion auf das Bestimmen (1235), dass das temporär gespeicherte erste biometrische Bild und das zweite biometrische Bild demselben Benutzer entsprechen, Aktualisieren (1120, 1245) des vorab registrierten Merkmalsmusters durch Hinzufügen mindestens eines Merkmalspunkts des Merkmalsmusters des ersten biometrischen Bildes und mindestens eines Merkmalspunkts des Merkmalsmusters des zweiten biometrischen Bildes zu leeren Merkmalspunktteilen des vorab registrierten Merkmalsmusters,
wobei das Bestimmen, dass das temporär gespeicherte erste biometrische Bild und das zweite biometrische Bild demselben Benutzer entsprechen, Folgendes umfasst:
Bestimmen einer Zeitdifferenz zwischen einem Zeitpunkt, zu dem das erste biometrische Bild erfasst wird, und einem Zeitpunkt, zu dem das zweite biometrische Bild erfasst wird, wobei das temporär gespeicherte erste biometrische Bild und das zweite biometrische Bild demselben Benutzer entsprechen, falls die Zeitdifferenz zwischen den beiden Rahmen kleiner als ein Schwellenwert ist.

5. Elektronische Vorrichtung nach Anspruch 4, wobei das temporär gespeicherte erste biometrische Bild und das zweite biometrische Bild demselben Benutzer entsprechen, falls eine Sensorwertdifferenz zwischen einem Sensorwert der elektronischen Vorrichtung beim Erfassen des ersten biometrischen Bildes und einem Sensorwert beim Erfassen des zweiten biometrischen Bildes kleiner als ein Sensorschwellenwert ist.

6. Elektronische Vorrichtung nach Anspruch 4, wobei das temporär gespeicherte erste biometrische Bild und das zweite biometrische Bild demselben Benutzer entsprechen, falls eine biometrische Datendifferenz zwischen einem Teil von biometrischen Daten des Benutzers, die durch den Sensor erfasst werden, wenn das erste biometrische Bild erfasst wird, und einem Teil von biometrischen Daten des Benutzers, die durch den Sensor erfasst werden, wenn das zweite biometrische Bild erfasst wird, kleiner als ein Schwellenwert ist.

## Revendications

1. Procédé de mise à jour d'un motif caractéristique biométrique, le procédé comprenant :
acquérir (1100), via un capteur, une pluralité d'images biométriques successives associées à un même type d'objet biométrique, chacune des images biométriques successives comprenant un motif caractéristique qui comprend des points caractéristiques, où l'objet biométrique est l'un parmi un iris ou une empreinte digitale, où la pluralité d'images biométriques successives comprend une première image biométrique et une deuxième image biométrique, où la deuxième image biométrique est acquise après l'acquisition de la première image biométrique ;
comparer (1105, 1210) un motif caractéristique de la première image biométrique avec un motif caractéristique préenregistré pour déterminer (1110) si le motif caractéristique de la première image biométrique correspond au motif caractéristique préenregistré selon un rapport prédéterminé ou supérieur ;
en réponse à la détermination que le motif caractéristique de la première image biométrique correspond au motif caractéristique préenregistré selon un rapport prédéterminé ou supérieur, mettre à jour (1120, 1240) le motif caractéristique préenregistré en ajoutant au moins un point caractéristique du motif caractéristique de la première image biométrique aux parties de points vides du motif caractéristique préenregistré ;
en réponse à la détermination que le motif caractéristique de la première image biométrique ne correspond pas au motif caractéristique préenregistré selon le rapport prédéterminé ou supérieur, stocker temporairement la première image biométrique ;
comparer (1105, 1210) un motif caractéristique de la deuxième image biométrique avec le motif caractéristique préenregistré pour déterminer (1110) si le motif caractéristique de la deuxième image biométrique correspond au motif caractéristique préenregistré selon le rapport prédéterminé ou supérieur, où en réponse à la détermination que le motif caractéristique de la deuxième image biométrique ne correspond pas au motif caractéristique préenregistré selon le rapport prédéterminé ou supérieur, la mise à jour est traitée comme un échec (123) ;
en réponse à la détermination que le motif caractéristique de la deuxième image biométrique correspond au motif caractéristique préenregistré selon le rapport prédéterminé ou supérieur et en réponse à la détermination (1235) que la première image biométrique stockée temporairement et la deuxième image biométrique correspondent à un même utilisateur, mettre à jour (1120, 1245) le motif caractéristique préenregistré en ajoutant au moins un point caractéristique du motif caractéristique de la première image biométrique et au moins un point caractéristique du motif caractéristique de la deuxième image biométrique aux parties de points caractéristiques vides du motif caractéristique préenregistré,
où le fait de déterminer que la première image biométrique stockée temporairement et la deuxième image biométrique correspondent au même utilisateur comprend :
déterminer une différence temporelle entre un point temporel lorsque la première image biométrique est acquise et un point temporel lorsque la deuxième image biométrique est acquise, où la première image biométrique stockée temporairement et la deuxième image biométrique correspondent au même utilisateur dans le cas où la différence temporelle entre les deux trames est inférieure à un seuil.

2. Procédé selon la revendication 1, où la première image biométrique stockée temporairement et la deuxième image biométrique correspondent au même utilisateur dans le cas où une différence de valeur de capteur entre une valeur de capteur du dispositif électronique lorsque la première image biométrique est acquise et une valeur de capteur lorsque la deuxième image biométrique est acquise, est inférieure à un seuil de capteur.

3. Procédé selon la revendication 1, où la première image biométrique stockée temporairement et la deuxième image biométrique correspondent au même utilisateur dans le cas où une différence de données biométriques entre une partie des données biométriques de l'utilisateur acquises par l'intermédiaire du capteur, lorsque la première image biométrique est acquise, et une partie des données biométriques de l'utilisateur acquises par l'intermédiaire du capteur, lorsque la deuxième image biométrique est acquise, est inférieure à un seuil.

4. Dispositif électronique (101) de mise à jour d'un motif caractéristique biométrique, le dispositif électronique comprenant :
une mémoire (380) ;
un capteur (340) ; et
un contrôleur (310) configuré pour :
acquérir, via le capteur (340), une pluralité d'images biométriques successives associées à un même type d'objet biométrique, chacune des images biométriques successives comprenant un motif caractéristique qui comprend des points caractéristiques, où l'objet biométrique est l'un parmi un iris ou une empreinte digitale, où la pluralité d'images biométriques successives comprend une première image biométrique et une deuxième image biométrique, la deuxième image biométrique est acquise après l'acquisition de la première image biométrique ;
comparer (1105, 1210) un motif caractéristique de la première image biométrique avec un motif caractéristique préenregistré sur l'utilisateur stocké dans la mémoire pour déterminer (1110) si le motif caractéristique de la première image biométrique correspond au motif caractéristique préenregistré selon un rapport prédéterminé ou supérieur,
en réponse à la détermination que le motif caractéristique de la première image biométrique correspond au motif caractéristique préenregistré selon le rapport prédéterminé ou supérieur, mettre à jour (1120, 1240) le motif caractéristique préenregistré en ajoutant au moins un point caractéristique du motif caractéristique de la première image biométrique aux parties de points caractéristiques vides du motif caractéristique préenregistré ;
en réponse à la détermination que le motif caractéristique de la première image biométrique ne correspond pas au motif caractéristique préenregistré selon le rapport prédéterminé ou supérieur, stocker temporairement la première image biométrique,
comparer (1105, 1210) un motif caractéristique de la deuxième image biométrique avec le motif caractéristique préenregistré pour déterminer (1110) si le motif caractéristique de la deuxième image biométrique correspond au motif caractéristique préenregistré selon le rapport prédéterminé ou supérieur, où en réponse à la détermination que le motif caractéristique de la deuxième image biométrique ne correspond pas au motif caractéristique préenregistré selon le rapport prédéterminé ou supérieur, la mise à jour est traitée comme un échec (1230) ; et
en réponse à la détermination que le motif caractéristique de la deuxième image biométrique correspond au motif caractéristique préenregistré selon le rapport prédéterminé ou supérieur et en réponse à la détermination (1235) que la première image biométrique stockée temporairement et la deuxième image biométrique correspondent à un même utilisateur, mettre à jour (1120, 1245) le motif caractéristique préenregistré en ajoutant au moins un point caractéristique du motif caractéristique de la première image biométrique et au moins un point caractéristique du motif caractéristique de la deuxième image biométrique aux parties de points caractéristiques vides du motif caractéristique préenregistré,
où le fait de déterminer que la première image biométrique stockée temporairement et la deuxième image biométrique correspondent au même utilisateur comprend :
déterminer une différence temporelle entre un point temporel lorsque la première image biométrique est acquise et un point temporel lorsque la deuxième image biométrique est acquise, où la première image biométrique stockée temporairement et la deuxième image biométrique correspondent au même utilisateur dans le cas où la différence temporelle entre les deux trames est inférieure à un seuil.

5. Dispositif électronique selon la revendication 4, où la première image biométrique stockée temporairement et la deuxième image biométrique correspondent au même utilisateur dans le cas où une différence de valeur de capteur entre une valeur de capteur du dispositif électronique lorsque la première image biométrique est acquise et une valeur de capteur lorsque la deuxième image biométrique est acquise, est inférieure à un seuil de capteur.

6. Dispositif électronique selon la revendication 4, où la première image biométrique stockée temporairement et la deuxième image biométrique correspondent au même utilisateur dans le cas où une différence de données biométriques entre une partie des données biométriques de l'utilisateur acquises par l'intermédiaire du capteur, lorsque la première image biométrique est acquise, et une partie des données biométriques de l'utilisateur acquises par l'intermédiaire du capteur, lorsque la deuxième image biométrique est acquise, est inférieure à un seuil.
